# NEUE EUROPÄISCHE PATENTSCHRIFT

(11) **EP 0 472 565 B2**
(45) Veröffentlichungstag und Bekanntmachung des Hinweises auf die Entscheidung über den Einspruch: **21.08.2002**
(45) Hinweis auf die Patenterteilung: 16.03.1994
(21) Anmeldenummer: 90907061.7
(22) Anmeldetag: 12.05.1990
(51) Int. Cl.: B01J 8/12, B01D 53/08

(54) **WANDERBETTREAKTORANLAGE**
MOVING BED REACTOR INSTALLATION
INSTALLATION DE REACTEUR A LIT MOUVANT

(30) Priorität: 19.05.1989 DE 3916325
(43) Veröffentlichungstag der Anmeldung: 04.03.1992
(60) Teilanmeldung: 93106615.3
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.
(86) Internationale Anmeldenummer: EP9000768
(87) Internationale Veröffentlichungsnummer: WO90014156

(56) Entgegenhaltungen:
- WO-A-88/08746
- WO-A-89/02779
- DE-A- 3 732 424
- GB-B- 574 421
- US-A- 2 519 874
- US-A- 2 550 955
- US-A- 2 642 206

## Beschreibung

Die Erfindung betrifft eine Wanderbettreaktoranlage zum Behandeln von Fluiden mittels eines als Schüttgut vorliegenden Feststoffes, vorzugsweise im Gegenstromverfahren, nach dem Oberbegriff des Anspruchs 1. Derartige Wanderbettreaktoranlagen sind bekanntermaßen für Reinigungsprozesse von Fluiden, bei denen eine oder mehrere der Fluidkomponenten an dem Schüttgut adsorbiert werden, aber auch für katalytische Reaktionen und viele weitere Prozesse verwendbar. In diesem Sinne ist unter "Behandeln" von Fluiden eine sehr umfangreiche Palette von Anwendungsmöglichkeiten zu verstehen.

Wanderbettreaktoranlagen der gattungsgemäßen Art sind aus der US-PS 2 519 874 bekannt.

Mit dieser bekannten mehrstufigen Wanderbettreaktoranlage werden Gase im Wege der selektiven Adsorption derart nach ihren Bestandteilen getrennt. daß eine an einer bestimmten Komponente angereicherte Gasfraktion und eine bezüglich dieser Komponente abgereicherte Gasfraktion erhalten wird. Zu diesem Zweck wird regeneriertes Adsorptionsmittel oben in den Reaktor eingegeben und auf seinem Weg bis zum unteren Reaktorende Schritt für Schritt durch die untereinander liegenden Reaktionskammern geleitet. Das am unteren Reaktorende abgezogene, bereits wieder regenerierte Adsorptionsmittel wird nach oberhalb des Reaktors gefördert und von dort dem Reaktor wieder aufgegeben, also im Kreislauf geführt. Unterhalb derAdsorptionszone wird das Adsorptionsmittel in zwei Teilströme aufgeteilt. Der eine dieser beiden Teilströme durchwandert zunächst 3 weitere Reaktionskammern, um von dort ausgehen durch Rohre in eine 4 Reaktionskammern tiefer liegende weitere Reaktionskammer zu gelangen. Der 2. Teilstrom wird zunächst durch Rohre durch die von dem 1. Teilstrom durchwanderten 3 Reaktionskammern hindurchgeführt, um anschließend die 3 nachfolgenden Reaktionskammern als Adsorpionsmittel zu durchwandern und schließlich in einer noch tiefer gelegenen Reaktionskammer mit dem 1. Adsorptionsmittelteilstrom wieder vereinigt und mit ihm gemeinsam weiter behandelt zu werden, bevor das gesamte Adsorptionsmittel am unteren Reaktorende den Reaktor verläßt um hochgefördert und erneut am oberen Reaktorende eingesetzt zu werden.

Bei dieser bekannten Wanderbettreaktoranlage wird die Wandergeschwindigkeit der einzelnen Adsorptionsmittelpartikel einerseits durch ein Adsorptionsmittelventil am unteren Reaktorende und andererseits durch die Dimensinierung der Durchmesser der Rohre und beeinflußt. Eine weitere Beeinflußung findet durch die unter Umständen unterschiedlichen Widerstände statt, denen die Adsorptionsmittelteilströme zwischen dem Teilungspunkt und dem Wiedervereinigungspunkt ausgesetzt sind. - Die Einsatzmöglichkeit dieser bekannten Wanderbettreaktoranlage ist daher auf mehrstufige Gasanreicherungs-/Gasabreicherungs-Prozesse im Wege der selektiven Adsorption an dem Adsorptionsmittel beschränkt.

Mit diesen bekannten Wanderbrettreaktoranlagen sind also nur ganz spezielle Fluidbehandlungen möglich, da hinsichtlich der Schüttgutzuteilung und des Schüttgutabzuges sogut wie keine Flexibilität gegeben ist.

Von diesem Stand der Technik ausgehend liegt der Erfindung die **Aufgabe** zugrunde, die Einsatzmöglichkeit solcher Reaktoren zu erweitern. Dabei ist es insbesondere erwünscht, eine differenziertere Fluidbehandlung als mit der bekannten Wanderbettreaktoranlage durchführen zu können und/oder besonders großflächige Wanderbetten (mit relativ geringer Betthöhe) auf kleinstem Raum unterzubringen.

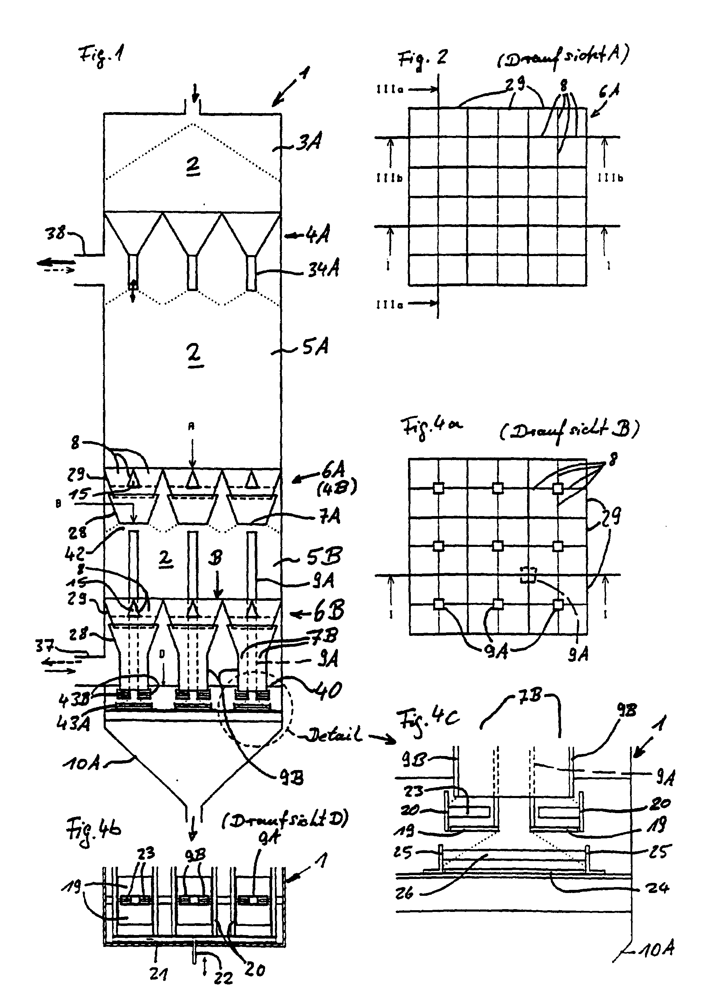

Zur **Lösung** dieser Aufgabe wird eine Wanderbettreaktoranlage mit den Merkmalen des Patentanspruchs 1 vorgeschlagen. Bei beiden alternativen Lösungswegen nach Patentanspruch 1 ist es vorgesehen, für zumindest einen Teil der übereinander angeordneten Reaktionskammern solche betätigbaren Schüttgutaustragsvorrichtungen vorzusehen, die wahlweise getrennt nach Reaktionskammern öffen- und schließbar sind. Über dieses gemeinsame Lösungsmerkmal hinaus ist es nach der 1. Alternative vorgesehen, daß die für mehrere übereinander liegende Reaktionskammern zuständigen betätigbaren Schüttgutaustragsvorrichtungen gemeinsam unterhalb der tiefer gelegenen Reaktionskammer angeordnet sind. Diese im Zusammenhang mit den Figuren 1 bis 10 beschriebene Variante ist im besonderen Maße dazu geeignet, daß Fluidbehandlungsprozesse in den einzelnen Reaktionskammern sehr unterschiedlich ablaufen können.

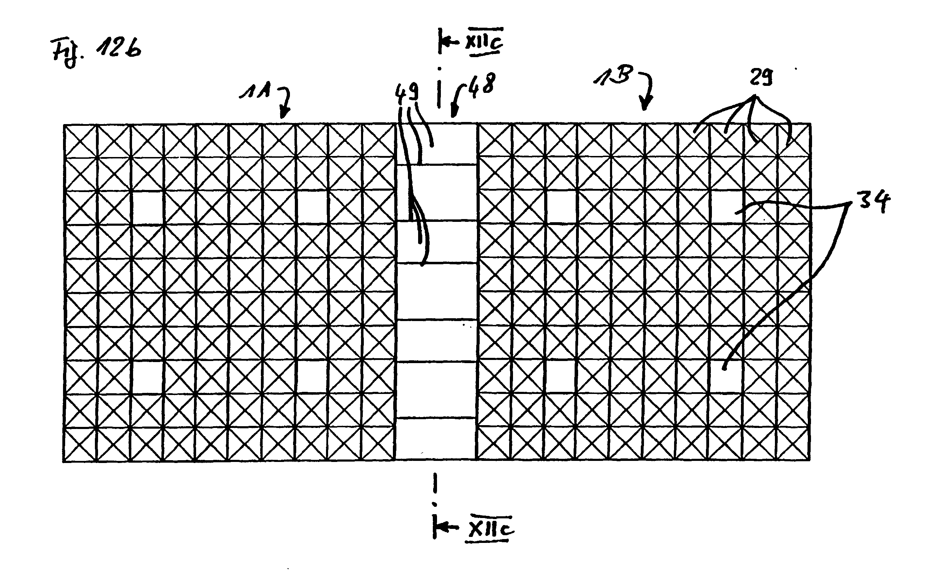

Bei der 2. Alternative sind die für die einzelnen Reaktionskammern zuständigen betätigbaren Schüttgutaustragsvorrichtungen jeweils unterhalb der betreffenen Reaktionskammer angeordnet Diese in Figuren 11 bis 13b beispielhaft dargestellte Ausführungsform der Erfindung ist im besonderen Maße für solche Wanderbettreaktoranlagen geeignet, bei denen sehr großflächige Wanderbetten mit relativ geringer Betthöhe auf kleinstem Raum untergebracht werden sollen.

Es versteht sich, daß die beiden Alternativen - grundsätzlich - auch für den jeweiligen anderen Anwendungszweck vorteilhaft einsetzbar sind.

Durch die Erfindung wird u. a. der Vorteil erreicht, daß durch die übereinanderliegenden Reaktionskammern Schüttgüter mit unterschiedlichen Volumenströmen und/oder unterschiedlicher Vorgeschichte und/oder unterschiedlicher Art, insbesondere unabhängig voneinander hindurchgeführt werden können. Ebenso ist es möglich, in den übereinander angeordneten Reaktionskammern gleiche Behandlungen gleichzeitig oder zeitversetzt zueinander durchzuführen. Dabei sind die Bauhöhe bzw. das Gewicht einer erfindungsgemäßen Wanderbettreaktoranlage vergleichsweise gering. Ebenso können relativ große Anströmflächen auf einen vergleichsweise kleinen Raum und insbesondere auf einer sehr kleinen Grundfläche untergebracht werden. Gleichwohl ist eine vergleichsweise sehr gleichmäßige Schüttgutverteilung bzw. ein sehr gleichmäßiger Schüttgutabzug zu bzw. von den einzelnen Reaktionskammern möglich. Insbesondere ist es möglich, das Schüttgut oder die Schüttgüter im wesentlichen planparallel durch die einzelnen Reaktionskammern zu führen. Ebenso kann auch das Fluid in sehr gleichmäßiger Verteilung und insbesondere mit im wesentlichen gleicher Verweildauer durch die Schüttgutschichten in den einzelnen Reaktionskammern geführt werden.

Zweckmäßige Ausgestaltungen des Erfindungsgegenstandes, die insbesondere ein sehr gleichmäßiges Hindurchführen der Schüttgutpartikel durch die verschiedenen Reaktionskammern sowie eine raumsparende Schüttgutzufuhr zu bzw. Schüttgutabfuhr von der Wanderbettreaktoranlage sowie eine flexible Einsetzbarkeit für verschiedenste Arten von Fluidbehandlungen und verschiedenen Reaktionsbedingungen in insbesondere platzsparender Weise gewährleisten, sind in weiteren Ansprüchen enthalten.

Die erfindungsgemäß zu verwendenden Bauteile bzw. Verfahrensschritte unterliegen in ihrer Größe, Formgestaltung, Materialauswahl und technischen Konzeption bzw. den Verfahrensbedingungen keinen besonderen Ausnahmebedingungen, so daß die in dem jeweiligen Anwendungsgebiet bekannten Auswahlkriterien uneingeschränkt Anwendung finden können; insbesondere sind sie auch unabhängig voneinander zur Lösung der Aufgabe oder zumindest einer Teilaufgabe vorteilhaft verwendbar.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen einer erfindungsgemäßen Wanderbettreaktoranlage beispielhaft dargestellt sind. In der Zeichnung zeigen:
- Fig. 1: eine Wanderbettreaktoranlage (erste Ausführungsform) im Vertikalschnitt entlang der Linie I-I gemäß Fig. 2 in schematisierter Darstellung;
- Fig. 2: von derselben Wanderbettreaktoranlage eine Draufsicht auf den oberen Anströmboden (Draufsicht A gemäß Fig. 1);
- Fig. 3a: von derselben Wanderbettreaktoranlage einen Vertikalschnitt durch ein einzelnes Modul des oberen Anströmbodens entlang der Linie IIIa-IIIa gemäß Fig. 2;
- Fig. 3b: von demselben Wanderbettreaktor einen weiteren Vertikalschnitt durch den oberen Anströmboden entlang der Linie IIIb-IIIb gemäß Fig. 2;
- Fig. 3c: von demselben Wanderbettreaktor eine Draufsicht auf eine untere Rinne des oberen Anströmbodens (Draufsicht C gemäß Fig. 3a/b));
- Fig. 4a: von demselben Wanderbettreaktor eine Draufsicht auf den unteren Anströmboden (Draufsicht B gemäß Fig. 1);
- Fig. 4b: von demselben Wanderbettreaktor eine Draufsicht auf die Schüttgutaustragsvorrichtungen (Draufsicht D gemäß Fig. 1);
- Fig. 4c: von derselben Austragsvorrichtung eine gegenüber Fig. 1 maßstabvergrößerte Detailansicht;
- Fig. 5a: einen weiteren Anströmboden im Vertikalschnitt (entsprechend Fig. 3a) - ausschnittsweise und in zwei alternativen Ausgestaltungen;
- Fig. 5b: von demselben Anströmboden eine Draufsicht auf das mittlere Modul, aber ohne Anströmkreuz (Draufsicht E gemäß Fig. 5a);
- Fig. 6a: ein weiterer Anströmboden in zwei alternativen Ausgestaltungen im Vertikalschnitt (entsprechend der Darstellung in Fig. 3a);
- Fig. 6b: von demselben Anströmboden die Schüttgutaustragsvorrichtung in Draufsicht (entsprechend Draufsicht F gemäß Fig. 6a);
- Fig. 6c: von demselben Anströmboden eine Draufsicht (Draufsicht F gemäß Fig. 6a);
- Fig. 7a: eine weitere Wanderbettreaktoranlage (zweite Ausführungsform) im Vertikalschnitt (entsprechend der Darstellungsart in Fig. 1);
- Fig. 7b: von derselben Wanderbettreaktoranlage eine perspektivische Detailansicht der Schüttgutzuteilung und -abführung unterhalb des oberen Anströmbodens;
- Fig. 8: eine weitere Wanderbettreaktoranlage (dritte Ausführungsform) in derselben Darstellungsart wie in Fig. 1;
- Fig. 9a: einen doppelten Schüttgutsammeltrichter im Vertikalschnitt entsprechend der Darstellungsart in Fig. 1;
- Fig. 9b: von demselben Schüttgutsammeltrichter eine vergrößerte Seitenansicht (gegenüber Fig. 9a um 90° gedreht) einer weiteren Schüttgutaustragsvorrichtung;
- Fig. 10: einen weiteren doppelten Schüttgutsammeltrichter entsprechend der Darstellungsart in Fig. 9a;
- Fig. 11: eine weitere Wanderbettreaktoranlage (vierte Ausführungsform) in der Darstellungsart wie in Fig. 1;
- Fig. 12a: eine weitere Wanderbettreaktoranlage (fünfte Ausführungsform) in der Darstellung gemäß Fig.
- Fig. 12b: 1 als Alternative zur vierten Ausführungsform; von derselben Wanderbettraktoranlage eine Draufsicht (Draufsicht G) auf den oberen Anströmboden;
- Fig. 12c: von derselben Wanderbettreaktoranlage ein Vertikalschnitt entlang der Linie XIIc-XIIc;
- Fig. 13a: eine weitere Wanderbettreaktoranlage (sechste Ausführungsform) in der Darstellung gemäß Fig. 12c als Alternative zur fünften Ausführungsform sowie
- Fig. 13b: von derselben Wanderbettreaktoranlage eine Draufsicht auf dem unteren Schüttgutverteilboden (Draufsicht H) gemäß Fig. 13a.

In Fig. 1 ist eine Wanderbettreaktoranlage 1 dargestellt, die zum Behandeln beliebiger, vorzugsweise gasförmiger Fluide dient und die mit einem einzigen Schüttgut 2 im Gegenstromverfahren betrieben wird. Natürlich ist grundsätzlich - wie auch bei allen nachfolgend beschriebenen Wanderbettreaktoranlagen - ein Betreiben im Gleichstromverfahren möglich, indem lediglich die Strömungsrichtung des Fluides in entgegengesetzte Richtung geändert wird.

Das Schüttgut 2 gelangt über einen Vorratsbunker 3A mit einem Schüttgutverteilboden 4A und ggf. Schüttgutzuteilrohre 34A, die zur Erzielung unterschiedlicher Betthöhen auch höhenverstellbar sein können (wie mit Doppelpfeil angedeutet), in eine erste (obere) Reaktionskammer 5A. Am unteren Ende der Reaktionskammer 5A befindet sich ein Anströmboden 6A. Dieser Anströmboden hat eine Mehrfachfu nktion: Erstens dient er dazu, das in der Reaktionskammer 5A zu behandelnde Fluid auf die Grundrißfläche der Reaktionskammer 5A gleichmäßig zu verteilen; durch ihn wird also das Fluid in der Reaktionskammer 5A eingelassen, sofern-wie bevorzugt - die Wanderbettreaktoranlage im Gegenstromverfahren betrieben wird. Zweitens dient derAnströmboden 6A dem Auslaß des Schüttgutes aus der Reaktionskammer 5A nach unten. Drittens dient der Anströmboden 6A als Schüttgutverteilboden (4B) zum Verteilen des Schüttgutes über den Querschnitt der darunter liegenden Reaktionskammer 5B. Der Anströmboden 6A wie auch der noch zu beschreibende (darunter liegende) Anströmboden 6B sind vorzugsweise in der gleichen Weise aufgebaut, wie dies in der W088/08746 des Anmelders beschrieben worden ist; d. h. daß er aus mindestens einem, vorzugsweise aber mehreren neben- und/oder hintereinander angeordneten trichter- oder rinnenförmigen Elementen 28 und/oder 29, vorzugsweise in Modulbauweise, gebildet ist, wobei diese Elemente jeweils eine oder mehrere mit Abstand zueinander angeordnete Schüttgutdurchlaßöffnungen 7A aufweisen. Der Übersichtlichkeit halber sind in Fig. 1 lediglich trichterförmige Elemente (Doppeltrichter 28, 29) dargestellt, während zu Rinnen zusammengefaßte Trichter, wie sie z. B. im Zusammenhang mit Fig. 3a bis 3c noch erläutert werden sollen, bevorzugt werden.

Unabhängig davon, ob einfache Trichter 29 oder jeweils zwei untereinander angeordnete Trichter 29 und 28 (Doppeltrichter) verwendet werden, weist der jeweils obere (bzw. einzige) Trichter 29 eines Moduls dachförmige Verteilelemente 8 auf, deren Ausgestaltungsmöglichkeiten sich im einzelnen aus der W088/08746 ergeben (siehe auch Fig. 6c).

Das Schüttgut gelangt über die Schüttgutdurchlaßöffnungen 7A des Anströmbodens 6A sowohl in die untere Reaktionskammer 5B als auch in die mit Abstand unterhalb der Schüttgutdurchlaßöffnungen 7A und konzentrisch zu diesen angeordneten Schüttgutabzugsrohre 9A. Die Schüttgutabzugsrohre 9A sind im wesentlichen senkrecht nach unten durch die Reaktionskammer 5B sowie durch den zugehörigen Anströmboden 6B hindurchgeführt. Auf diese Weise kann das den oberen Anströmboden 6A nach unten verlassende Schüttgut in die oben offenen Schüttgutabzugsrohre 9A hineingelangen und an deren unterem Ende kontinuierlich oder absatzweise abgezogen werden; dies wird weiter unten noch beschrieben.

Der (untere) Anströmboden 6B ist im wesentlichen in gleicher Weise wie der (obere) Anströmboden 6A aufgebaut, wobei die im Grundriß gleich großen Trichtermodule vertikal fluchtend unter den darüberliegenden Modulen des (oberen) Anströmbodens 6A angeordnet sind. Der (untere) Anströmboden 6B hat die Aufgabe, erstens das von unten der Wanderbettreaktoranlage zugeführte Fluid gleichmäßig über den Querschnitt der (unteren) Reaktionskammer 5B zu verteilen und zweitens das Schüttgut aus der Reaktionskammer 5B über Schüttgutdurchlaßöffnungen 7B nach unten durchzulassen.

Die Trichter oder Rinnen der Anströmböden der übereinanderliegenden Reaktionskammern können aber auch auf Lücke versetzt zueinander angeordnet sein, z. B. um eine über den Reaktionskammerquerschnitt vergleichmäßigte Betthöhe in der tiefer gelegenen Reaktionkammer zu erhalten. Dies ist in der Zeichnung nicht eigens dargestellt, da aus der W087/00768 des Anmelders grundsätzlich bereits bekant.

Das die Reaktionskammer 5B nach oben über die punktiert gezeichneten Schüttgutkegel sowie die Schüttgutdurchlaßöffnungen 7A verlassende Fluid durchströmt also in einer Reihenschaltung beide Reaktionskammern 5B und 5A nacheinander.

Am unteren Ende der Wanderbettreaktoranlage 1 befindet sich ein Schüttgutsammeltrichter 10A, an dessen unterem Ende das Schüttgut aus beiden Reaktionskammern aus der Wanderbettreaktoranlage abgeführt werden kann. Zu diesem Zweck können die Schüttgüter aus beiden Reaktionskammern gemeinsam im Schüttgutsammeltrichter 10A gesammelt werden. In der Regel wird man jedoch daran interessiert sein, die Schüttgüter aus den beiden übereinanderliegenden Reaktionskammern getrennt voneinander aus der Wanderbettreaktoranlage abzuführen. Für diesen Fall ist es erforderlich, voneinander unabhängig tätigbare Schüttgutaustragsvorrichtungen 43A und 43B unterhalb des (unteren) Anströmbodens 6B vorzusehen. Dies ist im einzelnen weiter unten beschrieben.

Die Ausführungsform nach Figur 1 eignet sich u. a. für Adsorptionsprozesse von unerwünschten Bestandteilen aus den Abgasen von Müllverbrennungsanlagen, aus denen z. B. sowohl Schwermetalle, insbesondere Quecksilber einerseits und z. B. Schwefel- oder Stickstoffoxide andererseits entfernt werden. Die Schwermetalladsorption findet dann in der unteren Reaktionskammer statt, während das so vorgereinigte Abgas in der oberen Reaktionskammer von den unerwünschten Gaskomponenten ganz oder teilweise befreit wird. In die untere Reaktionskammer gelangt dabei stets ein Adsorptionsmittel, das bereits mit den erwähnten gasförmigen Komponenten vorbeladen ist, während der oberen Reaktionskammer vorzugsweise frisches oder regeneriertes Schüttgut zugeführt wird. Es hat sich gezeigt, daß das in der oberen Reaktionskammer vorbeladene Schüttgut für die Adsorptionsvorgänge in der unteren Reaktionskammer häufig besonders geeignet sind - wie vorerwähnt beispielhaft beschrieben. Durch die Möglichkeit eines getrennten Schüttgutabzuges aus beiden übereinanderliegenden Reaktionskammern können sehr unterschiedliche Verweilzeiten bzw. Wandergeschwindigkeiten der Schüttgüter in den beiden Reaktionskammern realisiert werden. Da die Abzugszyklen für Schüttgut für die beiden Reaktionskammern in der Regel voneinander verschieden sind, können die beiden unterschiedlich beladenen Schüttgüter auch getrennt voneinander gesammelt und aus dem Sammeltrichter 10A getrennt voneinander abgeführt werden.

In Fig. 2 ist der Grundriß des (oberen) Anströmbodens 6A in Draufsicht dargestellt. Er besteht in dem dargestellten Beispiel aus neun dicht neben- und hintereinander angeordneten, mit durchgezogenen Linien dargestellten Trichtermodulen. Jedes Trichtermodul weist über kreuz angeordnete dachförmige Verteilelemente 8 auf, von denen der Übersichtlichkeit halber lediglich die strichpunktierten Dachfirste dargestellt sind.

Aus Fig. 3a bis 3c ist eine bezüglich der Darstellung in Fig. 1 alternative Ausführungsform für die Anströmböden dargestellt. Konkret betrifft diese Ausgestaltungsform zwar den (oberen) Anströmboden 6A, doch ist derselbe Grundgedanke des Zusammenfassens der Trichterelemente einer Reihe zu einer Rinne auch für die anderen Anströmböden verwendbar. Jede Rinne gemäß Fig. 3a bis 3c weist parallel zueinander verlaufende, nach untern konisch leicht zusammenlaufende Seitenwände 11 für die oberen Trichter 29 und 12 für die unteren Trichter 28 auf. In jede Rinne sind in Rinnenquerrichtung sich erstreckende paarweise nach unter aufeinander zulaufende Seitenwände 13 und 14 eingebaut, so daß im Grundriß quadratische Trichter entstehen. Diese Anordnung ist vergleichsweise biegesteif und in der Regel in der Lage, auch ohne zusätzliche Versteifungselemente die Druckkräfte des auf dem Anströmboden lastenden Schüttgutes aufzufangen, so daß sich ein selbsttragender Anströmboden ergibt.

Die aus den Seitenwänden 11 und 13 gebildeten oberen Trichter 29 weisen wiederum die weiter oben beschriebenen dachförmigen kreuzweise angeordneten Verteilelemente 8 auf. Dort, wo diese Verteilelemente an die Seitenwände 11 und 13 anschließen, decken sie dreiecksförmige Fluiddurchtrittsöffnungen 15 ab, die in den Seitenwänden 11 und 13 vorgesehen sind. In den Zwikelflächen zwischen benachbarten Trichtern einer Rinne können weitere Fluiddurchtrittsöffnungen 16 bzw. 17 vorgesehen sein, um den Widerstand für das Fluid zu vermindern; dies kann auch durch Einfügen von rohrförmigen Zwischenstücken geschehen, wie sie u. a. in Fig. 1 unter dem unteren Anströmboden vorgesehen sind.

Für die Zwecke eines oberen Anströmbodens kann der untere Spalt 18 zwischen den Seitenwänden 12 der unteren Rinne völlig offen bleiben. Lediglich im mittleren Bereich unterhalb jedes Doppeltrichtermoduls ist ein Schüttgutabzugsrohr 9A für die darüberliegende Reaktionskammer an den Seitenwänden 12 befestigt. Die genaue Höhenlage der oberen Mündungsöffnung des Schüttgutabzugsrohres 9A ist aber grundsätzlich frei wählbar - wie weiter unten noch zu erläutern.

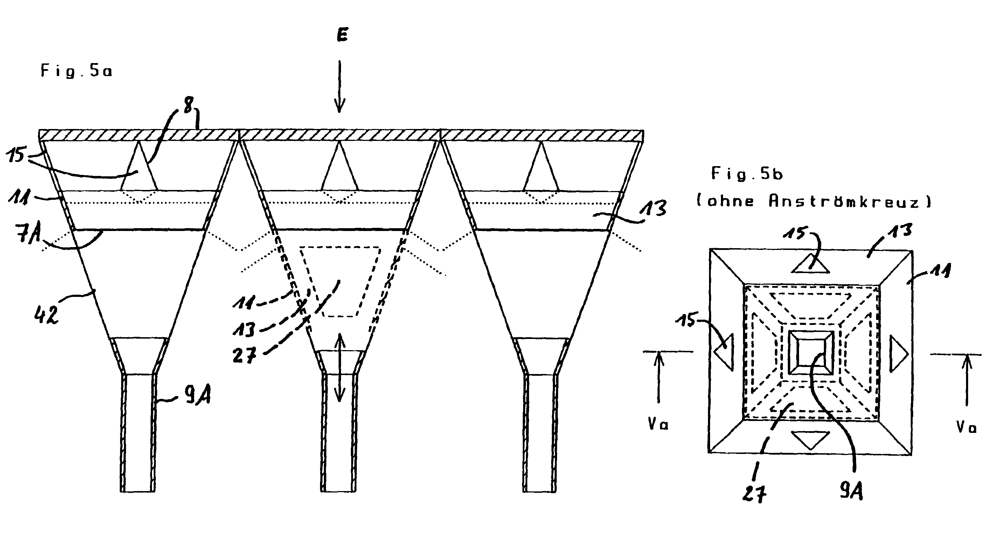

In Fig. 4a ist die der Fig. 2 entsprechende Draufsicht B auf den (unteren) Anströmboden 6B dargestellt. Die beiden Figuren 4a und 2 unterscheiden sich lediglich dadurch, daß gemäß Fig. 4a die Schüttgutabzugsrohre 9A durch den Kreuzungspunkt der Verteilelemente 8 jedes Trichtermoduls geführt ist, wobei der vorzugsweise quadratische Querschnitt der Rohre 9Agenauso großwie die von den Verteilelementen 8 in ihrem Kreuzungsbereich abgedeckte Fläche sein kann und vorzugsweise den gleichen Querschnitt wie andere Zuteil- und Abführrohre für Schüttgut zu und von den Reaktionskammern aufweist.

Aus Fig. 4b ist ersichtlich, daß bei dem (unteren) Anströmboden 6B die unteren Trichtermodule 28 keinen quadratischen, sondern einen rechteckigen Mündungsquerschnitt haben, der etwa dreimal so groß wie der Querschnitt der Schüttgutabzugsrohre 9A ist. Daher können rechts und links der Schüttgutabzugsrohre 9A zwei im Querschnitt etwa gleich große Schüttgutdurchlaßöffnungen 7B vorgesehen werden. In dem speziellen Ausführungsbeispiel mündet das Schüttgutabzugsrohr 9A etwas tiefer als die Schüttgutdurchlaßöffnungen 7B.

Wie aus Fig. 4c im einzelnen noch besser ersichtlich, sind unterhalb der beiden Schüttgutdurchlaßöffnungen 7B jedes (unteren) Trichters (oder Rinnen) Stauplatten 19 angeordnet. Der seitlich zwischen diesen Stauplatten 19 und den rechten und linken Begrenzungen der Mündungen der Schüttgutabzugsrohre 9B verbleibende Spalt wird durch im wesentlichen vertikale Stauplatten 20 abgeschlossen. Während die Stauplatten 19 jeweils nur den einzelnen Schüttgutdurchlaßöffnungen 7B zugeordnet sind, können die Stauplatten 20 für mehrere in einer Reihe hintereinander liegende Trichter- oder Rinnenmodule in Form eines Flacheisens zusammengefaßt sein (siehe Fig. 4b). Sämtliche Stauplatten 20 können dann über eine Querstrebe 21 miteinander verbunden und mittels eines Schub/Zug-Organs 22 vor- und zurückbewegt werden. Jeder Schüttgutdurchlaßöffnung 7B ist ein Schieber 23 zugeordnet, der im wesentlichen fingerförmig ausgebildet ist und an den Stauplatten 20 in etwa horizontaler Erstreckung befestigt ist. Werden nun über das Schub/Zug-Organ 22, die Querstrebe 21 und die Stauplatten 20 die Schieber 23 unterhalb der Schüttgutdurchlaßöffnungen 7B hin und herbewegt, so kann dadurch Schüttgut von den Stauplatten 19 nach vorne bzw. nach hinten hin abgeworfen werden. Auf diese Weise können wohldosierte Schüttgutmengen aus der unteren Reaktionskammer 5B ausgetragen werden. In ähnlicher Weise kann auch die Schüttgutaustragsvorrichtung 43A für die Schüttgutabzugsrohre 9A ausgebildet sein, welche mit Stauplatten 24 und 25 und einem zwischen den Stauplatten 25 angeordneten stabförmigen Schieber 26 ausgestattet ist. Die in der Ruhestellung der beiden Schüttgutaustragsvorrichtungen sich ergebenden Schüttgutkegel sind (wie auch in den übrigen Figuren) als punktierte Linien dargestellt.

Grundsätzlich ist es auch möglich, die Schüttgutaustragsvorrichtungen für die Schüttgutdurchlaßöffnungen 7B so zu gestalten, daß sie jeweils paarweise den einander nächstliegenden Schüttgutdurchlaßöffnungen benachbarter (und nicht derselben) Trichter oder Rinnen gemeinsam zugeordnet sind.

Mit der vorangehend beschriebenen Austragsvorrichtung ist es mithin möglich, aus der betreffenden Reaktionskammer jeweils nur einen kleinen Teil des darin sich befindenden Schüttgutes auszutragen. Aufgrund der besonderen Ausgestaltung des vorbeschriebenen Anströmbodens gelingt es dabei, eine im wesentlichen planparallele Schicht des Schüttgutes am unteren Ende der Schüttgutschicht aus der betreffenden Reaktionskammer auszutragen. Es ist also möglich, jeweils nur diejenige Schüttgutschicht auszutragen, die für eine weitere Behandlung des Fluides nicht mehr geeignet ist, z.B. weil ihre Adsorptionskapazität erschöpft ist. Die jeweils höher liegenden Schüttgutschichten in der betreffenden Reaktionskammer sind - bei Gegenstrombetrieb - in den meisten Fällen für eine noch längere Fluidbehandlung geeignet, insbesondere nimmt bei Adsorptionsprozessen der Beladungsgrad des Schüttgutes innerhalb der Reaktionskammer von unten nach oben ab.

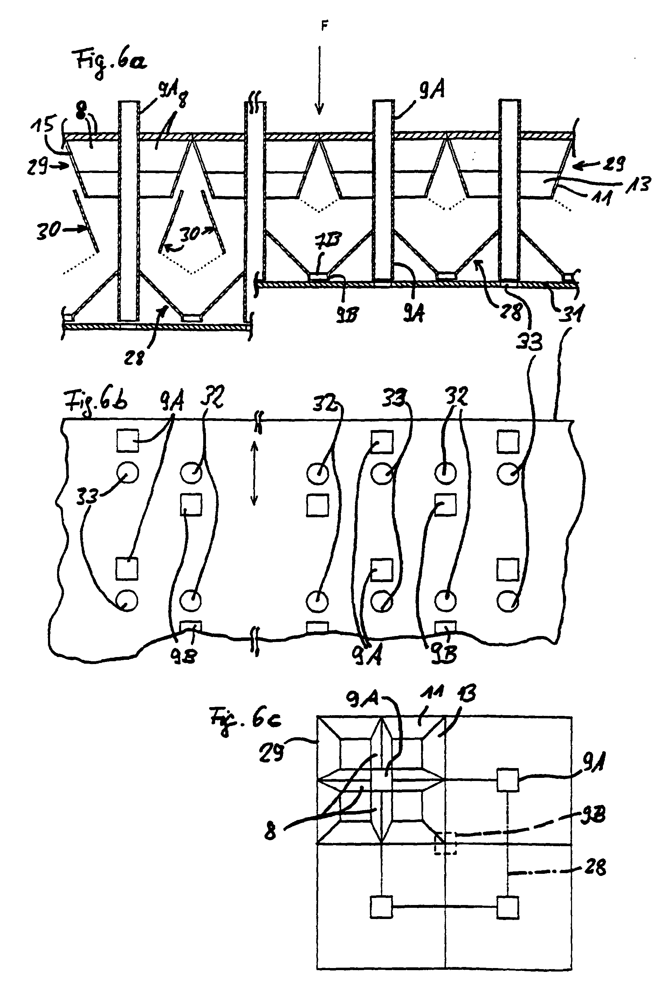

Wenn es hingegen gewünscht ist, jeweils das gesamte Schüttgut einer Reaktionskammer auszutauschen, so ist dies durch entsprechende Schüttgutaustragsvorrichtungen, wie sie z.B. im Zusammenhang mit Figuren 6a/b noch beschrieben werden, durchaus möglich. In beiden Fällen führt das Abziehen von Schüttgut aus einer Reaktionskammer zu einem Nachrutschen frischen Schüttgutes aus dem höher gelegenen Vorratsbunker. Dieses Nachrutschen hört von selbst auf, sobald die Spitze des sich ausbildenden Schüttgutkegels die darüber liegende Schüttguteinlaßöffnung erreicht hat.

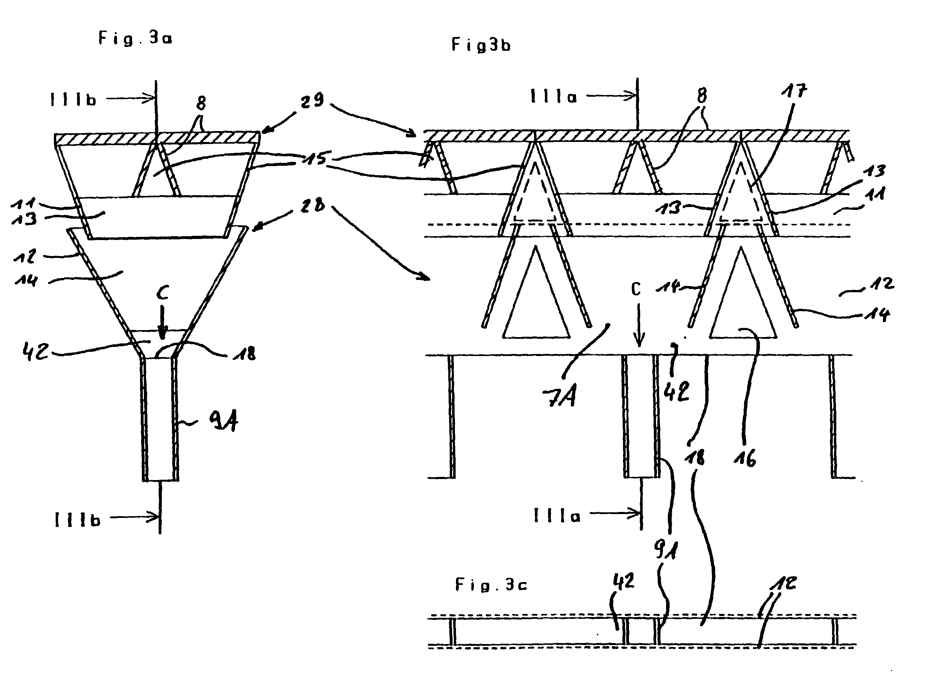

In Figuren 5 a/b ist eine weitere alternative Ausführungsform eines erfindungsgemäß vorteilhaft verwendbaren Anströmbodens dargestellt. Bei dieser Ausführungsform sind die in Figuren 3 a/b dargestellten unteren Trichter bzw. Rinnen fortgelassen worden. Diese Ausgestaltung ist insbesondere in Verbindung mit Wanderbettreaktoren gemäß Fig.1 als oberer Anströmboden verwendbar. Wie nämlich die punktierten oberen Begrenzungslinien des Schüttgutes zeigen, reicht die Schüttgutschicht in der unterhalb dieses Anströmbodens sich befindenden Reaktionskammer bis an die Unterkanten der Trichter. Somit können im Vergleich zu derAusführungsform gemäß Fig.1 geringere Bauhöhen erzielt werden. Zumindest wird aber das Gewicht und der Aufwand für die unteren Trichter oder Rinnen eingespart.

Aus Fig. 5a ist fernerhin eine besondere Anordnung der Schüttgutabzugsrohre 9A bezüglich des darügerliegenden Anströmbodens ersichtlich. Erstens ist die ober Mündungsöffnung der Schüttgutabzugsrohre 9A nach oben, insbesondere trichterförmig querschnittserweitert. Ferner ist die Schüttguteintrittsmündung der Schüttgutabzugsrohre 9 derart angeordnet, daß sie auf einer Umfangslinie einer fiktiven gradlinigen Verlängerung (gestrichelt dargestellt) der Trichter- oder Rinnenseitenwände 11 und 13 liegt. Durch jede einzelne dieser beiden Maßnahmen wird das Schüttgutabzugsverhalten durch die Schüttgutabzugsrohre 9A verbessert. Es ist lediglich in Kauf zu nehmen, daß auf diese Weise das durch die Schüttgutabzugsrohre 9A abgezogene Schüttgut mit demjenigen Fluid in Kontakt gekommen ist, das die Reaktionskammer durch deren Schüttgutschicht das Schüttgutabzugsrohr 9A geführt ist, durchströmt hat. Dies muß bei entsprechender Betthöhe in der betroffenen Reaktionskammer jedoch kein Nachteil sein. Wenn die Betthöhe ausreichend hoch ist bzw. das Schüttgut aus dieser Reaktionskammer hinreichend früh abgezogen wird, ist nämlich die Fluidbehandlung in dieser Reaktionskammer bereits abgeschlossen, wenn die Fluidströmung das Höhenniveau der - in der Regel in gleicher Ebene endenden - Schüttguteintrittsmündungen der Schüttgutabzugsrohre 9A erreicht hat. In diesen Fällen ist die Einsparung von Bauhöhe weniger bedeutsam als die Gewichts- und Aufwandseinsparung für die unteren Trichter, welche in erster Linie die Funktion haben, das Schüttgut durch eine relativ kleinflächige Schüttgutdurchlaßöffnung aus der höher gelegenen Reaktionskammer abzuführen.

In Fig. 5a ist am Beispiel des mittleren Moduls ferner gezeigt, daß das Schüttguteintrittsende der Schüttgutabzugsrohre 9A höhenveränderbar ausgestaltet sein kann. Hierdurch wird unter anderem erreicht, daß sich ändernden Prozeßbedingungen bei der Fluidbehandlung Rechnung getragen werden kann. Unteranderm wird durch diese Höhenverstellbarkeit die wirksame Betthöhe in der Reaktionskammer, durch welche diese Schüttgutabzugsrohre hindurchgeführt sind, veränderbar.

In Fig. 5a ist am Beispiel des mittleren Moduls eine weitere alternative Ausgestaltungsmöglichkeit des Anströmbodens dargestellt. Dort sind nämlich die Seitenwände 11 und 13 weiter nach unten durchgeführt als bei den übrigen Modulen (gestrichelt dargestellt) . In diesen Verlängerungen der Seitenwände nach unten befinden sich umfangsverteilt Durchbrechungen 27, durch die das Schüttgut an einem bereits relativ weit oben gelegenen Punkt aus dem betroffenen Trichter seitlich austreten kann, um die unterhalb des Anströmbodens liegende Reaktionskammer mit Schüttgut zu versorgen. In diesem Fall ist es sogar möglich, daß die Schüttgutabzugsrohre 9A unmittelbar an die unteren Mündungsöffnungen der Trichter angeschlossen sind (nicht eigens dargestellt). Durch derartige Seitenwanddurchbrechungen bzw. zumindest partielle Verlängerungen der Seitenwände der Trichter nach unten, wird aber nicht nur erreicht, daß ein Teil des durch den Anströmboden geführten Schüttgutes bereits an einem relativ hoch gelegenen Punkt in die darunter liegende Reaktionskammer eintreten kann, sondern es wird auch erreicht, daß der durch die Schüttgutabzugsrohre abzuziehende Teil des Schüttgutes besonders problemlos unten abgezogen werden kann.

Fig. 5b gestattet einen Blick von oben in das mittlere Modul des Anströmbodens gemäß Fig. 5a, wobei der Übersichtlichkeit halber die dachförmigen Verteilelemente fortgelassen wurden. Natürlich kann auch dieser Anströmboden rinnenförmig, d. h. wie in dem in Figuren 3a/b dargestellten Ausführungsbeispiel ausgestatet sein. Außerdem versteht es sich, daß die Durchbrechungen 27 ebenso als Randausnehmungen aus dem unteren Trichterrand ausgebildet sein können.

In Fig. 6a ist eine bezüglich Fig.1 alternative Anordnung eines Anströmbodens dargestellt, deren Grundprinzip einer auf Lücke versetzten Anordnung zwischen den oberen und unteren Trichtern (Doppeltrichter) eines Anströmbodens grundsätzlich für alle Anströmböden einer Wanderbettreaktoranlage geeignet ist. Das dargestellte konkrete Ausführungsbeispiel ist insbesondere für den untersten der übereinander angeordneten Anströmböden konzipiert. Die oberen Trichter oder Rinnen 29 des Anströmbodens sind in der gleichen Weise ausgebildet wie bei dem (untern) Anströmboden 6B gemäß Fig.1, d.h. die Trichter oder Rinnen sind mit kreuzförmig angeordneten dachförmigen Verteilelementen 8 (siehe Fig.6c) und mit Fluiddurchtrittsöffnungen 15 in den Seitenwänden 11 und 13 unmittelbar unterhalb der dachförmigen Verteilelemente 8 versehen. Ferner wird jeder obere Trichter 29 im Bereich der Kreuzung der dachförmigen Verteilelemente 8 von einem Schüttgutabzugsrohr 9A aus einem höher gelegenen Reaktionsraum durchdrungen. Aus diesem Grunde und wegen der auf Lücke versetzten Anordnung zwischen den oberen Trichtern oder Rinnen 29 und den unteren Trichtern oder Rinnen 28 wird erreicht, daß die Schüttgutdurchlaßöffnungen 7B für den dargestellten (unteren) Anströmboden auf Lücke versetzt zu den unteren Mündungsöffnungen der Schüttgutabzugsrohre 9A münden, insbesondere in der gleichen Ebene mit diesen. Die auf Lücke versetzte Anordnung ergibt sich besonders deutlich aus Figuren 6b und 6c.

Wie in Fig.6a in der linken Bildhälfte dargestellt ist, können zusätzlich Zwischentrichter oder -rinnen 30 vorgesehen sein, die ähnlich ausgestaltet und angeordnet sind wie bei den aus Fig.1 sich ergebenden Doppeltrichtern. Durch diese Zwischentrichter wird unter anderem die Gleichmäßigkeit der Fluidverteilung unter den Anströmboden verbessert.

Durch die auf Lücke versetzte Trichter- bzw. Rinnenanordnung können besonders einfache Schüttgutaustragsvorrichtungen realisiertwerden, z.B. in Form einer einzigen Schieberplatte 31, die unterhalb aller Schüttgutaustrittsmündungen in Richtung des in Fig.6b dargestellten Doppelpfeiles verschiebbar ist. Die Schiebeplatte 31 weist zu diesem Zweck Durchtrittsöffnungen 32 und 33 auf, die je nach Stellung wahlweise mit den Schüttgutabzugsrohren 9A (wie in Fig. 6a) oder 9B oder keinem der Schüttrohre fluchten.

In Fig. 6b ist die Schiebeplatte 31 in der Verschließposition für alle Schüttgutöffnungen dargestellt. Durch Verschieben der Schiebeplatte 31 in der Bildebene nach unten können die Durchtrittsöffnungen 32 mit den Schüttgutdurchlaßöffnungen 7B in Deckung gebracht werden. Bei entgegengesetzter Verschiebung werden die Durchtrittsöffnungen 33 mit den Schüttgutabzugsrohren 9A zur Deckung gebracht.

Die gleiche vereinfachte Schüttgutabzugsvorrichtung könnte auch bei der Ausführungsform gemäß Fig.1 realisiert werden, nämlich wenn die Trichter oder Rinnen des (unteren) Anströmbodens 6B auf Lücke versetzt zu den Trichtern oder Rinnen des (oberen) Anströmbodens 6A angeordnet sind. Dann durchdringen die Schüttgutabzugsrohre 9A nicht den Kreuzungsbereich der Verteilelemente 8, sondern den Berührungsbereich benachbarter Trichter oder Rinnen. Diese alternative Möglichkeit ist in Fig. 4a unten rechts als Alternative gestrichelt dargestellt.

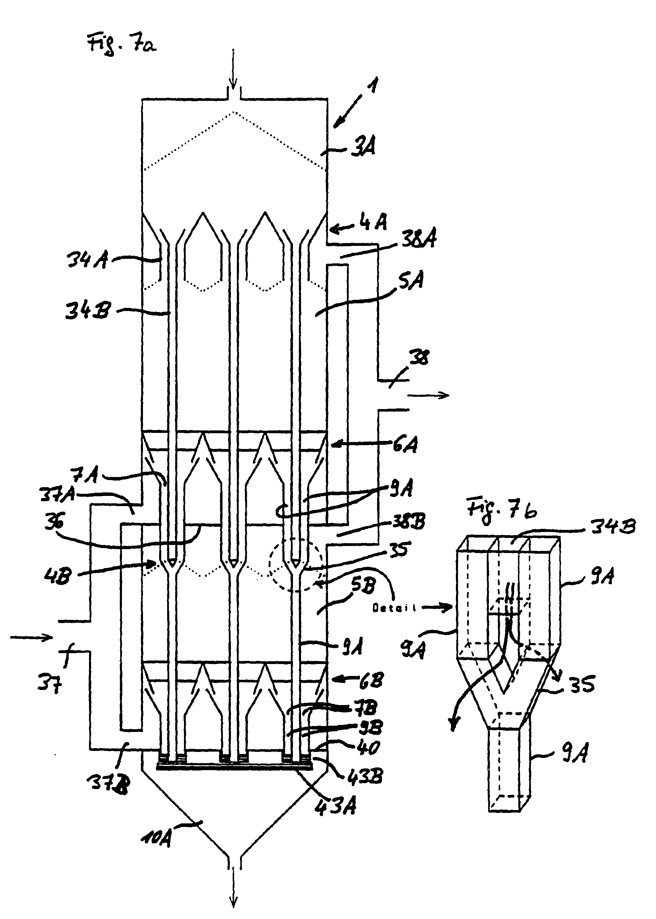

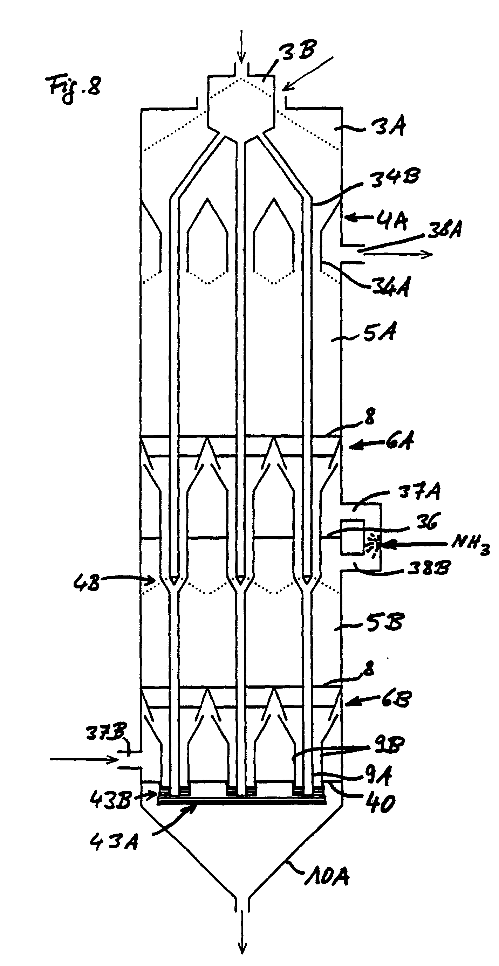

In Fig. 7a bis 7c ist eine alternative Ausführungsform (2. Ausführungsform) einer erfindungsgemäßen Wanderbettreaktoranlage 1 dargestellt. Bei dieser Ausführungsform wird nicht nur aus beiden Reaktionskammern 5A und 5B das Schüttgut getrennt voneinander abgezogen, sondern beide Reaktionskammern 5A und 5B werden jeweils mit frischem Schüttgut aus einem gemeinsamen Vorratsbunker 3A mit Schüttgut beaufschlagt Zu diesem Zweck sind oben offene, insbesondere trichterförmig erweiterte Schüttgutzuteilrohre 34B vorgesehen, die von dem Vorratsbunker 3A nach unten fortweisen und konzentrisch durch den Schüttgutverteilboden 4A des Vorratsbunkers 3A sowie durch eine (wie dargestallt) oder mehere (wie nicht dargestellt) oberhalb der zu beaufschlagenden Reaktionskammer 5B gelegene Reaktionskammer 5A und den zugehörigen Anströmboden 6A hindurchgeführt ist. In dem speziellen Ausführungsbeispiel sind die Schüttgutzuteilrohre 34B durch die Schüttgutdurchlaßöffnungen 7A des Anströmbodens 6A mittig hindurchgeführt. Ebenso können die Schüttgutzuteilrohre 34B an den Berührungspunkten benachbarter Trichter oder Rinnen durch den (oberen) Anströmboden 6A hindurchgeführt werden.

Bei dem dargestellten Ausführungsbeispiel ergibt sich unterhalb des (oberen) Anströmbodens 6Aeine ähnliche Anordnung der schüttgutführenden Rohre wie im Zusammenhang mit dem (unteren) Anströmboden 6B gemäß Fig.1 erläutert. Der Unterschied zu der Problemstellung in Fig. 1 besteht allerdings darin, daß gemäß Fig. 7a das Schüttgut aus dem Schüttgutzuteilrohr 34B nicht über eine Schüttgutaustragsvorrichtung abgezogen, sondern der (unteren) Reaktionskammer 5B zugeführt werden muß. Aus diesem Grund wird an die Schüttgutdurchlaßöffnungen 7Ades (oberen) Anströmbodens 6A das Schüttgutabzugsrohr 9A unter Zwischenfügung eines Y-förmigen Rohrverbinders 35 angeschlossen. Das zwischen den Schüttgutdurchlaßöffnungen 7A angeordnete Schüttgutzuteilrohr 34B mündet in dem Zwickelbereich des Y-Rohrverbinders 35, sodaß das Schüttgut aus dem Schüttgutrohr 34B bezüglich des Schüttgutes in dem Y-Rohrverbinder 35 um 90° versetzl seitlich aus- und in die (untere) Reaktionskammer 5B eintreten kann.

In Fig. 7a ist als weitere Besonderheit ein Zwischenboden 36 vorgesehen, der unterhalb des (oberen) Anströmbodens 6A angeordnet ist und einen Fluiddurchtritt von der unterhalb dieses Anströmbodens 6A gelegenen Reaktionskammer 5B in die oberhalb dieses Anströmbodens 6A gelegene Reaktionskammer 5A verhindert. in diesem Fall weist jede Reaktionskammer eigene Fluideinlässe 37A bzw. 37B und eigene Fluidauslässe 38A bzw. 38B auf. Derartige Zwischenböden und getrennte Fluidein- und -auslässe für jede Reaktionskammer sind selbstverständlich bei allen Ausführungsformen erfindungsgemäßer Wanderbettreaktoren realisierbar.

Gemäß Fig. 7a werden alle Fluideinlässe mit demselben Rohgas bei 37 beaufschlagt. Mithin ist diese Ausführungsform besonders geeignet, bei geringen zur Verfügung stehenden Grundflächen mehrfach so große Reaktionskammerquerschnitte zu realisieren.

Die übrigen Details dieserzweiten Ausführungsform entsprechen der ersten Ausfürungsform gemäß Fig.1.

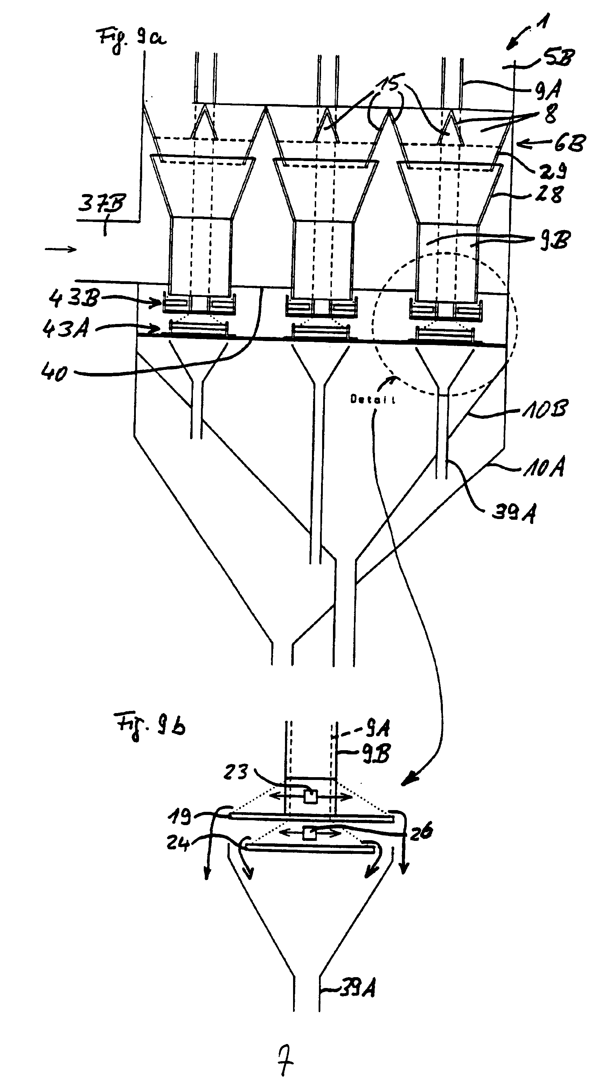

In Fig. 8 (3. Ausführungsform einer Wanderbettreaktoranlage) besteht die Besonderheit darin, daß mehrere voneinander unabhängige Vorratsbunker 3A und 3B vorgesehen und übereinander angeordnet sind. Um zu erreichen, daß die untereinander liegenden Reaktionskammern 5A und 5B mit verschiedenen Schüttgütern beaufschlagt werden können, sind - im Unterschied zu der 2. Ausführungsform gemäß Fig. 7a - die Schüttgutzuteilrohre 34 auch durch den unterhalb des (oberen) Vorratsbunkers 3B liegenden Vorratsbunker 3A hindurchgeführt.

In Fig. 8 ist als weitere Besonderheit der Fluidauslaß 38B der (unteren) Reaktionskammer 5B mit dem Fluideinlaß 37A der (oberen) Reaktionskammer 5A verbunden. Dadurch strömt ein einziger Fluidstrom nacheinender durch beide Reaktionskammern, wobei er in jeder der Reaktionskammern mit voneinander verschiedenen Schüttgütern behandelt werden kann. Diese Reihenschaltung des Fluides ist natürlich auch bei den übrigen Ausführungsbeispielen realisierbar. In der Umgehungsleitung 38B, 37A des Zwischenbodens 36 kann eine Zwischenbehandlung des Fluides vorgenommen werden, z.B. eine Bedüsung mit NH₃. Eine derartige Behandlung eignet sich zur Reinigung von Rauchgasen aus denen Schwefeloxyde und Stickstoffoxyde nacheinander entfernt werden sollen. Die Möglichkeit, unterschiedliche Schüttgüter in beiden Reaktionskammern für die SOₓ bzw. NOₓ- Abscheidung zu verwenden, gestattet es, für die jeweilige Fluidbehandlung optimale Schüttgüter zu verwenden, z. B. einen Aktivkoks, wie er von der Firma Bergbauforschung GmbH (BF) hergestellt wird für die SO₂-Abscheidung in der unteren Reaktionskammer und einem Herdofenaktivkoks wie er von der Firma Rheinbraun hergestellt wird. Für die NOₓ-Abscheidung in der oberen Reaktionskammer.

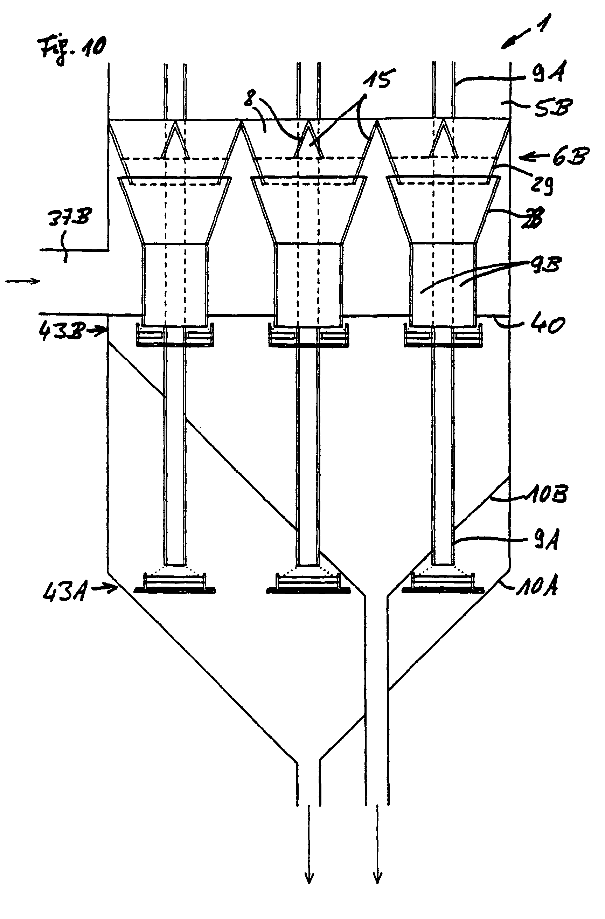

In Fig. 9a ist eine erste Möglichkeit dargestellt, unterhalb des untersten Anströmbodens zwei Schüttgutsammeltrichter 10A und 10B untereinander anzuordnen. Zu diesem Zweck ist das Schüttgutabzugsrohr 9A, durch welches Schüttgut aus der oberen der beiden übereinander liegenden Reaktionskammern ausgetragen wird, bzw. ein Verlängerungsstück 39A des Schüttgutabzugsrohres 9A durch den (oberen) Schüttgutsammeltrichter 10B in den (unteren) Schüttgutsammeltrichter 10A hindurchgeführt. Entsprechend ist das untere Mündungsrohr des (oberen) Schüttgutsammeltrichters 10A durch den (unteren) Schüttgautsammeltrichter 10B hindurchgeführt.

In Fig.9b ist gezeigt, wie es trotz dieser beiden Schüttgutsammeltrichter möglich ist, lediglich innerhalb des (oberen) Schüttgutsammeltrichters 10B die Schüttgutaustragsvorrichtungen für die verschiedenen übereinanderliegenden Reaktionskammern unterzubringen. Zu diesem Zweck eignet sich nämlich die Schüttgutaustragsvorrichtung gemäß Fig. 4c ebenfalls. Lediglich müssen die Stauplatten 19 und 24 für die beiden Schüttgutaustragsvorrichtungen entsprechend dimensioniert sein, d.h., daß die (obere) Stauplatte 19 länger als die (untere) Stauplatte 24 sein muß und das Verlängerungsstück 39A am oberen Mündungsende ausreichend groß oder hinreichend querschnittserweitert sein muß, um das von der Stauplatte 24 durch den Schieber 26 abgeworfene Schüttgut aufzufangen, ohne daß es sich mit dem von der oberen Stauplatte abgeworfenen Schüttgut vermischt. Der Übersichtlichkeit halber ist die Schüttgutaustragsvorrichtung gemäß Fig. 9b als Detail der Fig. 9a vergrößert und um 90° gedreht dargestellt.

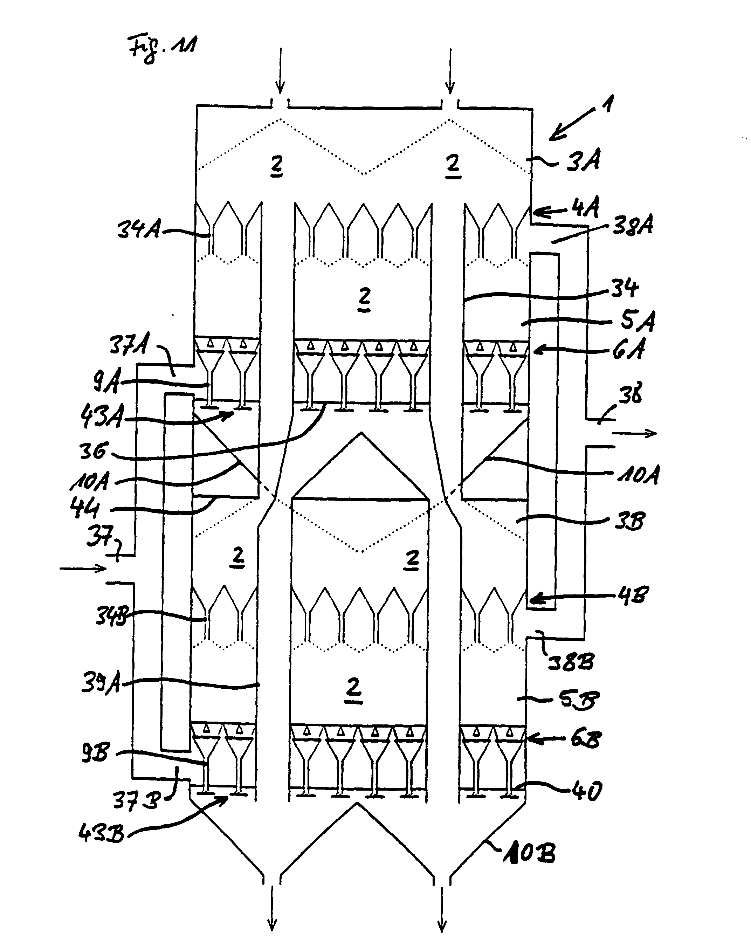

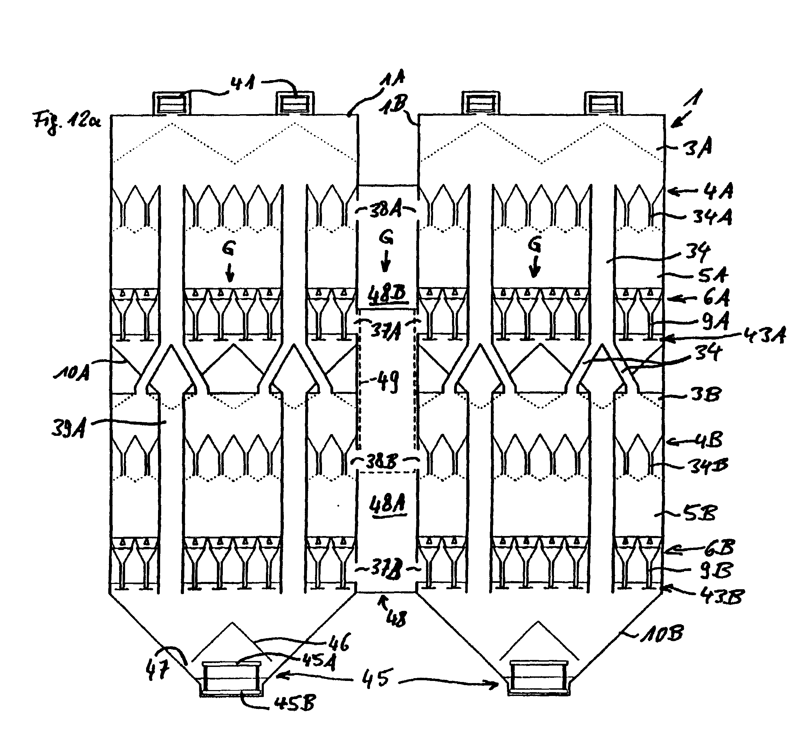

In Fig. 10 ist eine zu Fig. 9 alternative Ausführungsform dargestellt, bei der in jedem der beiden Schüttgutsammeltrichter 10A bzw. 10B voneinander unabhängige Schüttgutaustragvorrichtungen vorgesehen sind, die aber im übrigen in der gleichen Weise gestaltet werden können wie bereits beschriebenen Schüttgutaustragsvorrichtungen.

Im übrigen können der oder die Schüttgutsammeltrichter von dem Fluidanströmraum unterhalb des untersten Anströmbodens durch eine Zwischenwand 40 fluidisch abgetrennt sein.

Anstelle der Schüttgutaustragsvorrichtungen gemäß unter anderem Fig. 4c oder gemäß Fig. 6a/b ist es ebenfalls möglich, jeder einzelnen Schüttgutabzugsöffnung oder zwei benachbarten Schüttgutabzugsöffnungen gemeinsam je einen Schüttgutauffangbehälter zuzuordnen. Dieser kann insbesondere in Form eines oben und unten offenen Rohrabschnittes ausgebildet sein und/oder zwischen zwei Böden angeordnet sein, die Schüttgutdurchtrittsöffnungen an vorgegebenen Stellen aufweisen, wobei eine und/oder beide der Böden und/oder die Rohrabschnitte relativ zueinander bzw. relativ zu den Schüttgutaustragsöffnungen der Reaktionskammern im wesentlichen horizontal verschiebbar angeordnet sein können.

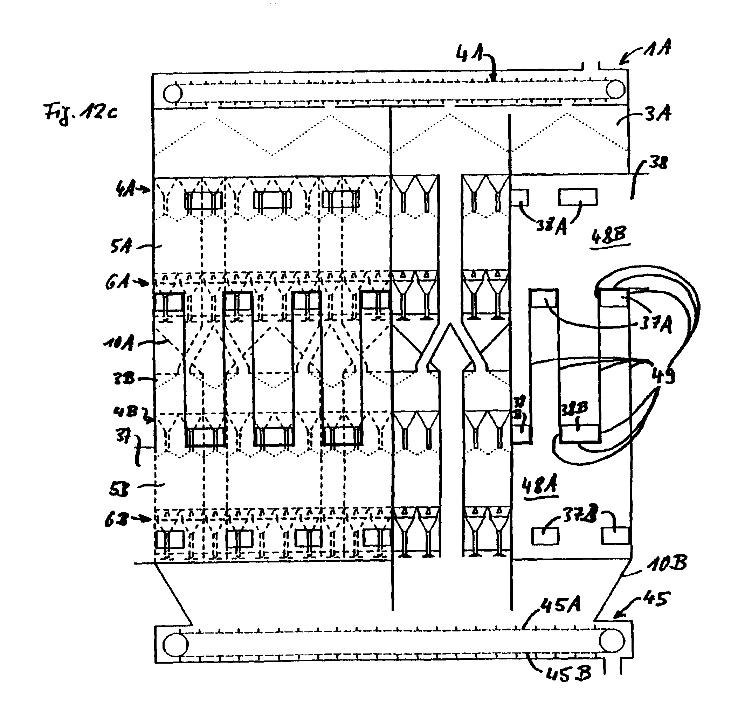

In Figuren 11 und 12a bis 12c sind zwei alternative Ausführungsformen (4. und 5. Ausführungsform) einer erfindungsgemäßen Wanderbettreaktoranlage dargestellt, bei denen in beiden Fällen unmittelbar oberhalb jeder Reaktionskammer ein eigener Vorratsbunker 3A und 3B vorgesehen ist. Schüttgutzuteilrohre 34 zum Beaufschlagen des tiefer gelegenen Vorratsbunkers 3B mit Schüttgut weisen von dem höher gelegenen Vorratsbunker 3A nach unten fort und sind durch die obere Reaktionskammer 5A und dem zugeörigen Anströmboden 6A hindurchgeführt.

In Fig. 12a ff. sind zur Beaufschalgung des Vorratsbunkers 3A Horizontalförderer 41 vorgesehen.

In Figuren 11 bis 13b sind die Querschnitte der Schüttgutzuteilrohre 34 und der Schüttgutabzugsrohre 9A zumindest im Bereich der Anströmböden bzw. der Schüttgutverteilböden derart dimensioniert und angeordnet, daß sie den Platz eines an dieser Stelle fortgelassenen Trichtermoduls (Trichter 29) einnehmen.

Die in Fig. 11 dargestellte 4. Ausführungsform sieht vor, daß das Schüttgut aus der (oberen) Reaktionskammer 5a unmittelbar unterhalb des zugehörigen Anströmbodens 6a in vorzugsweise mehreren Schüttgutsammeltrichtern 10A aufgefangen und von dort durch Verlängerungsstücke 39A durch die darunterliegende Reaktionskammer 5B und zugehörigen Anströmboden 6B geführt wird. Dabei sind die Verlängerungsstücke 39A schachtförmig ausgebildet und weisen den Querschnitt eines Trichtermoduls für den Schüttgutverteilboden 4B bzw. den Anströmboden 6B auf. Außerdem kann ein Zwischenboden 44 zur eigenständigen Fluidabdichtung nach oben des Vorratsbunkers 3B vorgesehen sein.

Bei der 5. Ausführungsform werden gemäß Fig. 12a und 12c Horizontalförderer 41 für die Schüttgutaufgabe und Horizontalförderer 45 für den Schüttgutabzug verwendet. Insbesondere eignen sich Kettenkratzförderer. Die Horizontalförderer 45 für den Schüttgutabzug sind am Auslaufende rinnenförmiger Schüttgutabzugsrinnen 10B angeordnet und vorzugsweise von Schüttgutverteilelementen 46 überdacht, welche zusammen mit den Seitenwänden der Rinnen 10B Schüttgutauslaufspalte 47 bilden. Hierdurch fällt das Schüttgut jeweils auf das Untertrum 45B des Horizontalförderers 45. Der weitere Unterschied zur 4. Ausführungsform gemäß Fig. 11 besteht darin, daß die Beaufschlagung der (unteren) Vorratsbunker 3B dadurch hinsichtlich der Welligkeit der Schüttgutoberfläche vergleichmäßigt wird, daß die Schüttgutzuteilrohre 34 an ihrem unteren Ende hosenbeinförmig oder in ähnlicher Weise verzweigt sind.

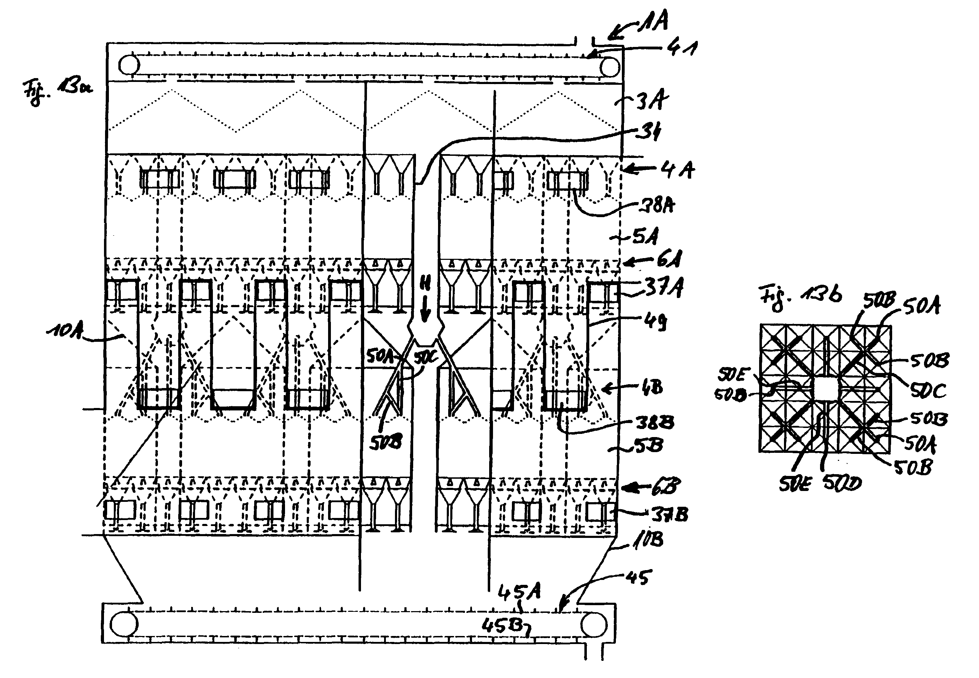

Zur Realisierung möglichst großer Anströmflächen auf kleinstem Raum und Ermöglichung einer modularen Bauweise ist es gemäß dem 5. und 6. Ausführungsbeispiel (Figuren 12a bis 12c bzw. 13a/b) vorgesehen, zwischen benachbarten Blöcken (Modulen) 1A und 1 B ein Fluidführungsgehäuse 48 vorzusehen, welches die gemeinsame Fluidzuführung zu und den gemeinsamen Fluidabzug aus mehreren Reaktionskammern der Wanderbettreaktoranlage 1 gestattet. Zu diesem Zweck ist das Fluidführungsgehäuse von einer meanderförmig angeordneten Trennwand 49 in einen Fluidzuführraum 48A und einen Fluidabführraum 48 B derart unterteilt, daß alle Fluideinlässe 37A und 37B für die Reaktionsräume 5A und 5B dem Fluidzuführraum 48A und alle Fluidauslässe 38A und 38B dem Fluidabführraum 48B zugeordnet sind. Diese Zuordnung ergibt sich besonders deutlich im rechten Viprtel gemäß Fig. 12c.

In Fig. 12c ist in der linken Bildhälfte der Orientierung halber die jenseits des Fluidführungsgehäuses 48 innerhalb des Anlagenblocks 1A sich ergebende Ansicht der verschiedenen Einbauten gestrichelt dargestellt. Im Vergleich zu Fig. 12a, in der die Darstellung aus einem um 90° geänderten Blickwinkel erfolgt, erkennt man u. a., daß die hosenbeinförmige Aufspaltung der Schüttgutzuteilrohre 34 auf insgesamt vier Teilrohre oderTeilrutschen vorgesehen ist. Ein Vergleich mit Fig. 12b zeigt, daß jedes dieser Teilrohre sechs Trichtermodule mit Schüttgut versorgt Diese Trichtermodule sind der Übersichtlichkeit halber lediglich durch ein X-förmiges Kreuz gekennzeichnet.

Derartige Wanderbettreaktoranlagen (wie auch die gemäß Figuren 13a/b) sind vor allem für Großanlagen geeignet.

Eine Wanderbettreaktoranlage gemäß Figuren 12a bis 12c kann z.B. mitgroßem Erfolg bei der Reinigung von aus Müllverbrennungsanlagen stammenden Abgasen erfolgreich zum Einsatz kommen. Diese Abgase stellen reinigungstechnisch ein besonderes Problem dar, weil sie in sehr großen Mengen anfallen und sehr unterschiedliche und in zum Teil nur geringen Konzentrationen auftretende gesundheitsschädliche Bestandteile, wie Schwermetalle und Dioxine, enthalten. Wenn derartige Abgase auch noch mit Staub belastet sind, stellt dies für die bisher bekannten Wanderbettreaktoranlagen ein mit der erforderlichen Betriebssicherheit und Gründlichkeit kaum zu lösendes Gasreinigungsproblem dar. Mit einer erfindungsgemäßen Wanderbettreaktoranlage werden derartige Schwierigkeiten problemlos überwunden, ohne das hierzu ein besonders großer apparativerAufwand, sehr kostspielige Adsorptionsmittel oder besonders große Mengen an Adsorptionsmitteln erforderlich wären.

In Figuren 13a und 13b ist als 6. alternative Ausführungsform dargestellt, wie die Schüttgutverteilung für die (unteren) Reaktionsräume 5B bei Wanderbettreaktoranlagen mit besonders großflächigen Anströmböden 6A/B realisierbar ist. Zu diesem Zweck ist am unteren Ende der Schüttgutzuteilrohre 34 ein System von Verzweigungsrohre 50A bis 50E vorgesehen, von denen lediglich die oberen Enden der Verzweigungsrohre 50A und 50D am unteren Ende der Schüttgutzuteilrohre 34 ansetzen, während die Verzweigungsrohre 50B, 50C und 50E von den Verzweigungsrohren 50A und 50D abgezweigt sind. Auf diese Weise kann, wie aus Fig. 13b ersichtlich, von einem einzigen Schüttgutzuteilrohr 34 ein Feld von 24 Trichtermodulen mit Schüttgut versorgt werden, wobei jedem Trichtermodul ein eigenes Verzweigungsrohr zugeordnet ist. Hierdurch erbibt sich eine einfache, funktionssichere und raumsparende Schüttgutverteilung bei außerordentlich günstiger Ausprägung der Schüttgutschicht-Oberfläche in dem betreffenden Reaktionsraum. Außerdem kann dadurch der Aufwand für einen zweiten (unteren) Vorratsbunker eingespart werden. Die Verzweigungrohre 50A bis 50E bilden also einen Schüttgutverteilboden 4B. Im übrigen ist der Aufbau bei diesem Ausführungsbeispiel der gleiche wie beim 5. Ausführungsbeispiel (gemäß Figuren 12a bis 12c). Im dritten Viertel der Darstellung (von links) ist demgemäß auch bei diesem Ausführungsbeispiel die Seitenwand des Anlagenblocks 1A der Übersichtlichkeit halber fortgelassen worden.

Wie aus dem Vorangehenden ersichtlich ist unter einem "Schüttgutverteilboden" im Sinne der Erfindung jede Anordnung zum mehr oder minder gleichmäßigen Verteilen des Schüttgutes auf den Reaktorquerschnitt zu verstehen, und zwar auch dann, wenn es sich nicht um einen "Boden" im engeren Sinne handelt sondern um ein ähnlich wirkendes System aus Verzweigungsrohren oder dgl..

### Bezugszeichenliste:

- 1: Wanderbettreaktoranlage
- 1A/B: Anlagenblöcke
- 2: Schüttgut
- 3A: Vorratsbunker
- 3B: Vorratsbunker
- 4A: Schüttgutverteilboden
- 48: Schüttgutverteilboden
- 5A: Reaktionskammer
- 5B: Reaktionskammer
- 6A: Anströmboden
- 6B: Anströmboden
- 7A: Schüttgutdurchlaßöffnungen
- 7B: Schüttgutdurchlaßöffnungen
- 8: Verteilelemente
- 9A: Schüttgutabzugsrohre
- 9B: Schüttgutabzugsrohre
- 10A: Schüttgutsammeltrichter/-rinnen
- 10B: Schüttgutsammeltrichter/-rinnen
- 11: Seitenwände
- 12: Seitenwände
- 13: Seitenwände
- 14: Seitenwände
- 15: Fluiddurchtrittsöffnungen
- 16: Fluiddurchtrittsöffnungen
- 17: Fluiddurchtrittsöffnungen
- 18: Spalt
- 19: Stauplatte
- 20: Stauplatte
- 21: Querstrebe
- 22: Schub/Zug-Organ
- 23: Schieber
- 24: Stauplatten
- 25: Stauplatten
- 26: Schieber
- 27: Durchbrechungen
- 28: untere Trichter/Rinnen
- 29: obere Trichter/Rinnen
- 30: Zwischentrichter/-Rinnen
- 31: Schieberplatte
- 32: Durchtrittsöffnungen
- 33: Durchtrittsöffnungen
- 34: Schüttgutzuteilrohre
- 34A: Schüttgutzuteilrohre
- 34B: Schüttgutzuteilrohre
- 35: Y-Rohrverbinder
- 36: Zwischenboden
- 37: Fluideinlaß
- 37A: Fluideinlässe
- 37B: Fluideinlässe
- 38: Fluidauslaß
- 38A: Fluidauslässe
- 38B: Fluidauslässe
- 39A: Verlängerungsstück
- 40: Zwischenboden
- 41: Horizontalförderer
- 42: Auslaßöffnungen
- 43A: Schüttgutaustragsvorrichtung
- 43B: Schüttgutaustragsvorrichtung
- 44: Zwischenboden
- 45: Horizontalförderer
- 45A/B: Ober-/Untertrum
- 46: Schüttgutverteilelemente
- 47: Schüttgutauslaufspalte
- 48: Fluidführungsgehäuse
- 48A: Fluidzuführraum
- 48B: Fluidabführraum
- 49: Trennwand
- 50A bis 50E: Verzweigungsrohre

### Bezugszeichenliste:

- A: Draufsicht
- B: Draufsicht
- C: Draufsicht
- D: Draufsicht
- E: Draufsicht
- F: Draufsicht
- G: Draufsicht
- H: Draufsicht

## Patentansprüche

1. Wanderbettreaktoranlage zum Behandeln von Fluiden mittels eines als Schüttgut vorliegenden Feststoffes, vorzugsweise im Gegenstromverfahren, bei dem wenigstens ein Schüttgut von oben nach unten wandert und wenigstens ein Fluid von unten nach oben strömt, bestehend aus mindestens zwei übereinander angeordneten Reaktionskammern mit
a) wenigstens einem Einlaß und wenigstens einem Auslaß je Reaktionskammer zum Durchsatz des Schüttgutes durch die Reaktionskammer
b) wenigstens einem weiteren Einlaß und wenigstens einem weiteren Auslaß je Reaktionskammer zum Durchsatz des Fluides durch das in der Reaktionskammer befindliche Schüttgut,
c) einem Anströmboden je Reaktionskammer zum Verteilen des Fluides über den Querschnitt der Reaktionskammer und zum Durchlassen des Schüttgutes nach unten, wobei jeder Anströmboden vorzugsweise aus mindestens einem trichter- oder rinnenförmigen, eine oder mehrere mit Abstand zueinander angeordnete Schüttgutdurchlaßöffnungen aufweisenden Element gebildet ist, und
d) einem Schüttgutverteilboden je Reaktionskammer zum Verteilen des Schüttgutes über den Querschnitt der Reaktionskammer,
e) Mitteln zum Zu- und Abführen des wenigstens einen Schüttgutes sowie des wenigstens einen Fluides zu und von den Reaktionskammern,
f) einem oder mehreren unterhalb des betreffenden Anströmbodens angeordneten Schüttgutabzugsrohren oder- schächten zum Abziehen des Schüttgutes aus zumindest einer oberen Reaktionskammer,
wobei das eine oder die mehreren Schüttgutabzugsrohre (9A) oder -schächte durch die mindestens eine tiefer gelegene Reaktionskammer (5B) und den zu dieser gehörigen Anströmboden (6B) hindurchgeführt sind,
**dadurch gekennzeichnet,**
**daß** die unteren Mündungen zumindest einer Reihe von Schüttgutabzugsrohren (9A,9B) oder-schächten aus verschiedenen übereinander angeordneten Reaktionskammern (5A,5B) unterhalb des untersten Anströmbodens der tiefer gelegenen Reaktionskammern (5B) münden und von mindestens einer betätitigbaren Schüttgutaustragsvorrichtung) (31; 43A,43B) wahlweise getrennt nach Reaktionskammern öffenoder schließbar sind (Fig.1 bis Fig. 10) oder daß zwischen übereinander angeordneten Reaktionskammern (5A, 5B) eine obere betätigbare Schüttgutaustragsvorrichtung (43A) für die höher gelegene Reaktionskammer (5A) angeordnet ist, daß sich an diese obere Schüttgutaustragsvorrichtung (43A) mindestens ein durch die tiefer gelegene Reaktionskammer (5B) mit Anströmboden (6B) hindurchgeführtes Verlängerungsstück (39A) anschließt und als Schüttgutabzugsrohr oder -schacht dient und daß für die tiefer gelegene Reaktionskammer (5B) eine untere betätigbare Schüttgutaustragsvorrichtung (43B) vorgesehen ist (Fig. 11 bis Fig. 13b).

2. Wanderbettreaktioranlage nach Anspruch 1,
**dadurch gekennzeichnet, daß**
für die Beaufschlagung einer unteren Reaktionskammer (5B) mit Schüttgut ein oder mehrere Schüttgutzuteilrohre (34,34A) oder -schächte durch die eine oder mehreren oberhalb dieser unteren Reaktionskammer (5B) gelegene/n Reaktionskammer/n (5A) und den/die zugehörigen Anströmboden/-böden (6A) hindurchgeführt sind.

3. Wanderbettreaktoranlage nach Anspruch 1 und 2, **dadurch gekennzeichnet, daß** bei gemeinsam unterhalb der tiefer gelegenen Reaktionskammer (5B) angeordneten Schüttgutaustragsvorrichtungen (31; 43A, 43B) für mehrere übereinandergeordnete Reaktionskammern (5A, 5B) ein in einer im wesentlichen einzigen Ebene wirksames Absperrorgan (31) für mehrere Reaktionskammern (5A, 5B) vorgesehen ist oder die unteren Mündungen benachbarter Schüttgutabzugsrohre (9A,9B) oder -schächte aus verschiedenen, übereinander angeordneten Reaktionskammern (5A,5B) in zwei verschiedenen Ebenen münden und die öffen- und schließbare Absperrorgane oder Schüttgutaustragsvorrichtungen für die unteren Mündungen der Schüttgutabzugsrohre (9A,9B) oder -schächte oder Schüttgutdurchlaßöffnungen (7A,7B) aus mit Abstand unterhalb der Mündungen angeordneten Schüttgutstauplatten (19) oder (24) und zwischen den Mündungen und den Stauplatten seitlich verfahrbaren Abräumschiebern (23) oder (26) bestehen.

4. Wanderbettreaktoranlage nach Anspruch 3, **dadurch gekennzeichnet, daß** der seitlich zwischen den Schüttgutstauplatten (19) und einer rechten bzw. linken Begrenzung der Mündungen der Schüttgutabzugsrohre (9B) verbleibende Spalt durch im wesentlichen vertikale Stauplatten (20) abgedeckt ist.

5. Wanderbettreaktoranlage nach Anspruch 3 oder 4, **dadurch gekennzeichnet, daß** die den Schüttgutabzugsrohren (9A) zugeordneten Schüttgutstauplatten (24) von seitlichen, im wesentlichen vertikalen Stauplatten (25) begrenzt sind.

6. Wanderbettreaktoranlage nach einem der Ansprüche 3 bis 5, **dadurch gekennzeichnet, daß** die Stauplatten (20; 25) für mehrere in einer Reihe hintereinander liegende Trichter- oder Rinnenmodule zusammengefaßt sind.

7. Wanderbettreaktoranlage nach Anspruch 6, **dadurch gekennzeichnet, daß** die Stauplatten über eine Querstrebe (21) miteinander verbunden sind.

8. Wanderbettreaktoranlage nach einem der Ansprüche 4 bis 7, **dadurch gekennzeichnet, daß** die Stauplatten mehrerer Trichter- oder Rinnenmodule mittels eines Schub-/Zug-Organes (22) gemeinsam vor- und zurückbewegbar sind.

9. Wanderbettreaktoranlage nach einem der Ansprüche 4 bis 8, **dadurch gekennzeichnet, daß** die Abräumschieber (23) oder (26) finger- oder stabförmig ausgebildet und an den Stauplatten (20) bzw. (25) in etwa horizontaler Erstreckung befestigt sind.

10. Wanderbettreaktoranlage nach einem der Ansprüche 3 bis 9, **dadurch gekennzeichnet, daß** die den Schüttgutdurchlaßöffnungen (7B) zugeordneten Schüttgutaustragsvorrichtungen (43B) jeweils paarweise den beiden nächstliegenden Schüttgutdurchlassöffnungen (7B) gemeinsam zugeordnet sind.

11. Wanderbettreaktoranlage nach Anspruch 3, **dadurch gekennzeichnet, daß** eine einzige Schüttgutaustragsvorrichtung, z. B. in Form einer einzigen Schieberplatte (31) unterhalb aller Schüttgutaustrittsmündungen in etwa horizontal verschiebbarerAnordnung vorgesehen ist und die je nach Stellung wahlweise mit den Schüttgutabzugsrohren (9A) oder (9B) oder keinem der Schüttgutrohre fluchtende Durchtrittsöffnungen (32; 33) aufweist.

12. Wanderbettreaktoranlage nach einem derAnsprüche 3 bis 10, **dadurch gekennzeichnet, daß** die oberhalb der Schüttgutstauplatten (24) gelegenen Schüttgutstauplatten (19) länger als die Schüttgutstauplatten (24) sind und zum Auffangen des von der unteren Schüttgutstauplatte (24) abgeworfenen Schüttgutes ein oben offenes Mündungsstück vorgesehen ist, welches das von der oberen Schüttgutstauplatte (19) abgeworfene Schüttgut von dem von der unteren Schüttgutstauplatte (24) abgeworfene Schüttgut fernhält.

13. Wanderbettreaktoranlage nach Anspruch 3, **dadurch gekennzeichnet, daß** jeder einzelnen Schüttgutabzugsöffnung oder benachbarten Schüttgutabzugsöffnungen gemeinsam je ein Schüttgutauffangbehälter zugeordnet ist, wobei die Schüttgutabzugsöffnungen oder die Schüttgutauffangbehälter relativ zueinander im wesentlichen horizontal verschiebbar sind.

14. Wanderbettreaktoranlage nach einem derAnsprüche 1 bis 13, **dadurch gekennzeichnet, daß** oberhalb der obersten Reaktionskammer (5A) ein oder mehrere Schüttgutbunker (3A, 3B) angeordnet sind.

15. Wanderbettreaktoranlage nach Anspruch 14, **dadurch gekennzeichnet, daß** Schüttgutzuteilrohre (34B) für eine tiefer gelegene Reaktionskammer (5B) durch den Schüttgutbunker (3A) für eine höhergelegene Reaktionskammer (5A) hindurchgeführt sind.

16. Wanderbettreaktoranlage nach Anspruch 15, **dadurch gekennzeichnet, daß** mehrere Schüttgutbunker übereinander angeordnet sind und von dem höheren Schüttgutbunkern ein oder mehrere Schüttgutzuteilrohre oder- schächte nach unten durch den darunter liegenden Schüttgutbunker hindurchgeführt sind.

17. Wanderbettreaktoranlage nach Anspruch 15 oder 16, **dadurch gekennzeichnet, daß** die Schüttgutzuteilrohre oder -schächte (34B) für eine tiefer gelegene Reaktionskammer (5B) durch die Schüttgutzuteilrohre oder -schächte (34A) für eine höher gelegene Reaktionskammer (5A) hindurchgeführt sind.

18. Wanderbettreaktoranlage nach einem der Ansprüche 14 bis 17, **dadurch gekennzeichnet, daß** die einen oder mehreren Schüttgutbunker mit einem oder mehreren nach unten fortweisenden Schüttgutzuteilrohren oder -schächten versehen sind und die Schüttgutzuteilrohre (34) oder -schächte für tiefer gelegene Reaktionskammern (5B) durch die Schüttgutdurchlaßöffnungen (7A) des oder der höher gelegenen Anströmbodens/-böden (6A) hindurchgeführt sind.

19. Wanderbettreaktoranlage nach Anspruch 18, **dadurch gekennzeichnet, daß** die Schüttgutzuteilrohre (34) an ihrem unteren Ende ein- oder mehrfach nacheinander hosenbeinförmig verzweigt sind.

20. Wanderbettreaktoranlage nach einem der Ansprüche 1 bis 19, **dadurch gekennzeichnet, daß** unmittelbar oberhalb jeder Reaktionskammer (5A und 5B) ein eigener Schüttgutbunker angeordnet ist und ein oder mehrere Schüttgutzuteilrohre (34A) oder -schächte zum Beaufschlagen tiefer gelegener Schüttgutbunker mit Schüttgut von einem höher gelegenen Schüttgutbunker nach unten fortweisend angeordnet sind.

21. Wanderbettreaktoranlage nach einem der Ansprüche 1 bis 10, **dadurch gekennzeichnet, daß** unterhalb des untersten Anströmbodens ein oder mehrere Schüttgutsammeltrichter (10A,10B) neben- oder untereinander angeordnet sind.

22. Wanderbettreaktoranlage nach Anspruch 21, **dadurch gekennzeichnet, daß** bei untereinander angeordneten Sammeltrichtern (10A,10B) ein oder mehrere Schüttgutabzugsrohre (9A,39A) für das Schüttgut aus zumindest einer der Reaktionskammern (5A,5B) durch jeweils höher gelegene Schüttgutsammeltrichter (10A) zu einem tiefer gelegenen Schüttgutsammeltrichter (10B) hindurchgeführt sind.

23. Wanderbettreaktoranlage nach einem der Ansprüche 1 bis 20, **dadurch gekennzeichnet, daß** unmittelbar unterhalb des Anströmbodens (6A) einer oberen Reaktionskammer (5A) mindestens ein Schüttgutsammeltrichter (10A) zum Auffangen des Schüttgutes aus der oberen Reaktionskamker (5A) vorgesehen ist und daß Verlängerungsstücke (39A) zum Abführen des Schüttgutes aus dem mindestens einen Schüttgutsammeltrichter (10A) vorgesehen und durch die tiefergelegene Reaktionskammer (5B) und den zugehörigen Anströmboden (6B) hindurchgeführt ist.

24. Wanderbettreaktoranlage nach einem der Ansprüche 1 bis 23, **dadurch gekennzeichnet, daß** die Schüttgutabzugsrohre mindestens eines Anströmbodens (6A, 6B) durch einen fluiddichten Zwischenboden (36, 40) hindurchgeführt sind.

25. Wanderbettreaktoranlage nach einem der Ansprüche 1 bis 24, **dadurch gekennzeichnet, daß** innerhalb zumindest jeden oberen Trichters (29) oder jeder oberen Rinne mindestens eines der Anströmböden (6A,6B) dachförmige Verteilelemente (8) derart angeordnet sind, daß sie zumindest den zentralen, vorzugsweise den gesamten Flächenbereich der zugehörigen Schüttgutdurchlaßöffnung (7A,7B) dachähnlich überdecken,
daß die Verteilelemente (8) zusammen mit den Seitenwänden (11,13) jedes Trichters oder jeder Rinne Schüttgutdurchtrittsöffnungen bilden und
daß die Verteilelemente (8) trichterinnenseitig bzw. rinneninnenseitig von den Seitenwänden (11,13) zum Trichterinneren bzw. zum Rinneninneren hin abstehen und über den Trichterumfang bzw. entlang der Rinne verteilt angeordnet sind, wobei vorzugsweise in den Trichter- oder Rinnenseitenwänden Fluiddurchtrittsöffnungen (15) angeordnet sind.

26. Wanderbettreaktoranlage nach Anspruch 25, **dadurch gekennzeichnet, daß** die Schüttgutabzugsrohre durch den Kreuzungspunkt der Verteilelemente (8) je eines Trichtermoduls hindurchgeführt sind.

27. Wanderbettreaktoranlage nach Anspruch 26, **dadurch gekennzeichnet, daß** die Schüttgutabzugsrohre dieselbe Querschnittsfläche einnehmen wie die von den Verteilelementen (8) in ihrem Kreuzungsbereich abgedeckte Fläche.

28. Wanderbettreaktoranlage nach einem der Ansprüche 1 bis 27, **dadurch gekennzeichnet, daß** mehrere Schüttgutabzugsrohre (9A) durch einen Y-förmigen Rohrverbinder (35) miteinander verbunden sind.

29. Wanderbettreaktoranlage nach Anspruch 28, **dadurch gekennzeichnet, daß** ein Schüttgutzuteilrohr (34B) etwa im Zwickel bereich des Y-Rohrverbinders (35) mündet.

30. Wanderbettreaktoranlage nach Anspruch 25, **dadurch gekennzeichnet, daß** die Querschnitte der das Schüttgut einer oberen Reaktionskammer (5A) abführenden Verlängerungsstücke (39A) oder die Querschnitte von eine untere Reaktionskammer (5B) mit Schüttgut versorgenden Schüttgutzuteilrohren (34) oder beide Rohrarten derart dimensioniert und angeordnet sind, daß sie im Bereich ihrer Durchführung durch einen Anströmboden (6A, 6B) den Platz eines an dieser Stelle fortgelassenen Trichters (29) des Anströmbodens einnehmen.

31. Wanderbettreaktoranlage nach einem der Ansprüche 1 bis 30, **dadurch gekennzeichnet, daß** unmittelbar unterhalb der oberen Trichter (29) oder Rinnen ein unterer Trichter (28) oder eine untere Rinne in fluchtender oder auf Lücke versetzter Anordnung vorgesehen ist.

32. Wanderbettreaktoranlage nach Anspruch 31, **gekennzeichnet durch** einen Zwischentrichter (30) oder eine Zwischenrinne zwischen den oberen Trichtern (29) oder den oberen Rinnen und den dazu auf Lücke versetzt darunter angeordneten unteren Trichtern (28) oder unteren Rinnen.

33. Wanderbettreaktoranlage nach einem der Ansprüche 1 bis 32, **dadurch gekennzeichnet, daß** nebeneinander in einer Reihe angeordnete Trichter (28 oder 29 oder 28 und 29) an zwei einander gegenüberliegenden Seiten mit gemeinsamen, eine Rinne bildenden Seitenwänden (11,12) versehen sind.

34. Wanderbettreaktoranlage nach Anspruch 33, **dadurch gekennzeichnet, daß** zwischen den die Rinnenlängsrichtung bildenden Seitenwänden (11 oder 12 oder 11 und 12) Trichter bildende Seitenwände (13 oder 14 oder 13 und 14) angeordnet sind.

35. Wanderbettraktoranlage nach Anspruch 33 oder 34, **dadurch gekennzeichnet, daß** in den in Rinnenlängsrichtung sich erstreckenden gemeinsamen Seitenwänden (11 oder 12 oder 11 und 12) im Bereich zwischen seitlich benachbarten Trichtern Fluiddurchtrittsöffnungen (16,17) vorgesehen sind.

36. Wanderbettreaktoranlage nach einem der Ansprüche 1 bis 35, **dadurch gekennzeichnet, daß** die Schüttgutzuteilrohre (34,34A,34B) oder -schächte oder die Schüttgutabzugsrohre (9A,9B) oder -schächte fluchtend oder versetzt zu den Durchtrittsöffnungen für Schüttgut oder den Durchlaßöffnungen für Fluid oder versetzt zu beidem durch den jeweils betroffenen Anströmboden (6A,6B) hindurchgeführt sind.

37. Wanderbettreaktoranlage nach einem der Ansprüche 11 bis 16, **dadurch gekennzeichnet, daß** die Schüttgutzuteilrohre (34,34A,34B) oder -schächte oder die Schüttgutabzugsrohre (9A,9B) oder -schächte im Berührungsbereich benachbarter Trichter oder Rinnen oder konzentrisch zu den Schüttgutdurchlaßöffnungen durch den jeweils betroffenen Anströmboden (6A,6B) hindurchgeführt sind.

38. Wanderbettreaktoranlage, insbesondere nach einem der Ansprüche 25 bis 37, **dadurch gekennzeichnet, daß** Trichter oder Rinnen übereinander angeordneter Anströmböden (6A,6B) fluchtend oder auf Lücke versetzt zueinander angeordnet sind.

39. Wanderbettreaktoranlage insbesondere nach einem der Ansprüche 25 bis 38, **dadurch gekennzeichnet, daß** in einem Bereich zwischen den Schüttgutdurchlaßöffnungen (7A) eines oberen Anströmbodens (5A) und den Schüttgutabzugsrohren (9A) Auslaßöffnungen (42) oder Durchbrechungen (27) für Schüttgut von der Reaktionskammer (5A) oder einem Schüttgutbunker oberhalb des Anströmbodens (6A) in die Reaktionskammer (5B) unterhalb des Anströmbodens (6A) vorhanden sind.

40. Wanderbettreaktoranlage nach einem der Ansprüche 1 bis 39, **dadurch gekennzeichnet, daß** die Schüttgutabzugsrohre (9A) mit vertikalem Abstand unterhalb der Schüttgutdurchlaßöffnungen (7A) beginnen.

41. Wanderbettreaktoranlage nach Anspruch 40, **dadurch gekennzeichnet, daß** die Schüttguteintrittsmündung der Schüttgutabzugsrohre (9A) höhenverstellbar ist.

42. Wanderbettreaktoranlage nach Anspruch 40 oder 41, **dadurch gekennzeichnet, daß** der Bereich nahe der Schüttguteintrittsmündung der Schüttgutabzugsrohre (9A) nach oben querschnittserweitert ist.

43. Wanderbettreaktoranlage nach einem der Ansprüche 40 bis 42, **dadurch gekennzeichnet, daß** bei einem aus einem oder mehreren Trichtern oder Rinnen bestehenden Anströmboden (6A) die Schüttguteintrittsmündungen der Schüttgutabzugsrohre (9A) auf einer Umfangslinie einer fiktiven gradlinigen Verlängerung derTrichter- oder Rinnenseitenwände (11,13) liegt.

44. Wanderbettreaktoranlage nach einem der Ansprüche 40 bis 43, **dadurch gekennzeichnet, daß** bei einem aus einem oder mehreren Trichtern oder Rinnen bestehenden Anströmboden (6A) im Bereich der Schüttgutdurchlaßöffnungen (7A) mindestens eine Durchbrechung (27) oder partielle Verlängerung der Seitenwände (11,13) vorgesehen ist, so daß ein Teil des Schüttgutes bereits an einem höher gelegenen Punkt seitlich austreten kann und ein anderer Teil des Schüttgutes weiter nach unten geführt wird.

45. Wanderbettreaktoranlage nach einem der Ansprüche 1 bis 44, **dadurch gekennzeichnet, daß** unterhalb eines unteren und oberhalb eines oberen Anströmbodens (6B und 6A) die Einlässe und Auslässe für das Fluid angeordnet sind, so daß das Fluid nacheinander die übereinander liegenden Reaktionskammern (5B) und (5A) durchströmt.

46. Wanderbettreaktoranlage nach einem der Ansprüche 1 bis 45, **dadurch gekennzeichnet, daß** unterhalb eines oberen Anströmbodens (6A) ein den Fluiddurchtritt von der unterhalb dieses Anströmbodens gelegenen Reaktionskammer (5B) in die oberhalb dieses Anströmbodens gelegene Reaktionskammer (5A) unterbindender Zwischenboden (36) vorhanden ist und daß die beiden Reaktionskammern (5A) und (5B) und zugehörigen Anströmböden (6A,6B) jeweils eigene Einlässe (37A,37B) und Auslässe (38A,38B) für Fluid aufweisen, so daß beide Reaktionsräume mit dem gleichen Fluid oder mit verschiedenen Fluiden in Parallelschaltung oder von einem einzigen Fluid nacheinander durchströmbar sind.

47. Verfahren zum Betreiben einer Wanderbettreaktoranlage nach einem der Ansprüche 1 bis 46,
**dadurch gekennzeichnet, daß**
die Schüttgüter aus übereinander angeordneten Reaktionskammern unterhalb des untersten oder einzelner verschiedener Anströmbodens getrennt voneinander abgezogen werden.

48. Verfahren nach Anspruch 47, **dadurch gekennzeichnet, daß** in der Wanderbettreaktoranlage Abgase, vorzugsweise aus Verbrennungsanlagen, wie Müllverbrennungsanlagen, von unerwünschten Bestandteilen, wie Schwermetall, insbesondere Quecksilber, gasförmigen Umweltgiften, wie Schwefel- oder Stickstoffoxyden, befreit werden.

49. Verfahren nach Anspruch 47 oder 48, **dadurch gekennzeichnet, daß** in eine untere Reaktionskammer ein Adsorptionsmittel gelangt, das bereits in einer oberen Reaktionskammer vorbeladen worden ist, während der oberen Reaktionskammer frisches oder regeneriertes Schüttgut zugeführt wird.

50. Verfahren nach einem der Ansprüche 47 bis 49, **dadurch gekennzeichnet, daß** ein in einer unteren Reaktionskammer behandeltes Fluid aus dieser Reaktionskammer abgeführt, mit einem Fluid, wie NH₃, vermischt und nachfolgend einer oberen Reaktionskammer zugeführt wird.

## Claims

1. A moving-bed reactor installation for treating fluids by means of a solid present as bulk material, preferably in the counterflow process, in which at least one bulk material moves downwards from above and at least one fluid flows upwards from below, comprising at least two reaction chambers arranged one above the other, with
a) at least one inlet and at least one outlet *per* reaction chamber for the throughput of the bulk material through the reaction chamber,
b) at least one further inlet and at least one further outlet *per* reaction chamber for the throughput of the fluid through the bulk material present in the reaction chamber,
c) one inflow floor *per* reaction chamber for distributing the fluid over the cross-section of the reaction chamber and for the transmission of the bulk material downwards, each inflow floor preferably being formed by at least one funnel-shaped or channel-shaped member which comprises one or more bulk-material transmission openings arranged spaced one from another, and
d) a bulk-material distribution floor *per* reaction chamber for distributing the bulk material over the cross-section of the reaction chamber,
e) means for the supply and removal of the bulk material - of which there is at least one - and the fluid - of which there is at least one - to and from the reaction chambers,
f) one or more bulk-material discharge pipes or shafts arranged below the respective Inflow floor for discharging the bulk material from at least one upper reaction chamber, wherein the one or more bulk-material discharge pipes (9A) or shafts are led through the at least one reaction chamber (5B) situated at a lower level and the inflow floor (6B) associated therewith,
**characterized in that** the lower openings of at least one row of bulk-material discharge pipes (9A, 9B) or shafts open out of various reaction chambers (5A, 5B) arranged one above the other below the lowest inflow floor of the reaction chambers (5B) situated at a lower-level and are openable or closable towards the reaction chambers optionally separately from at least one operable bulk-material discharge device (31; 43A, 43B) (Figs. to 10), or an upper bulk-material delivery device (43A) for the reaction chamber (5A) situated at a higher level is arranged between the reaction chambers (5A, 5B) arranged one above the other; at least one extension member (39A) passing through the reaction chamber (5B) situated at a lower level with the inflow floor (6B) is attached to the said upper operable bulk-material delivery device (43A) and acts as a bulk-material discharge pipe or shaft; and a lower operable bulk-material delivery device (43B) is provided for the reaction chamber (5B) situated at a lower level (Figs. 11 to 13b).

2. A moving-bed reactor installation according to Claim 1, **characterized In that** in order that a lower reaction chamber (5B) may be acted upon with bulk material one or more bulk-material metering pipes (34, 34A) or shafts is or are led through the one or more reaction chamber or chambers (5A), situated above the said lower reaction chamber (5B), and the associated inflow floor or floors (6A).

3. A moving-bed reactor installation according to Claims 1 and 2, **characterized In that** with bulk-material delivery devices (31; 43A, 43B) arranged jointly below the reaction chamber (5B) situated at a lower level for a plurality of reaction chambers (5A, 5B) arranged one above the other a cut-off device (31) active in an essentially single plane is provided for a plurality of reaction chambers (5A, 5B), or the lower openings of adjacent bulk-material discharge pipes (9A, 9B) or shafts open from different reaction chambers (5A, 5B) arranged one above the other at two different levels, and the openable and closable cut-off members or bulk-material delivery devices for the lower openings of the bulk-material discharge pipes (9A, 9B) or shafts or bulk-material transmission openings (7A, 7B) comprise bulk-material baffle plates (19) or (24), arranged at a distance below the openings, and removal slides (23) or (26), movable laterally between the openings and the baffle plates.

4. A moving-bed reactor installation according to Claim 3, **characterized in that** the gap remaining laterally between the bulk-material baffle plates (19) and a right-hand or left-hand boundary of the openings of the bulk-material discharge pipes (9B) is covered by substantially vertical baffle plates (20).

5. A moving-bed reactor installation according to Claim 3 or 4, **characterized In that** the bulk-material baffle plates (24) associated with the bulk-material discharge pipes (9A) are bounded by lateral, substantially vertical baffle plates (25).

6. Amoving-bed reactor installation according to one of Claims 3 to 5, **characterized In that** the baffle plates (20; 25) for a plurality of funnel or channel modules arranged in a row one behind the other are combined.

7. A moving-bed reactor installation according to Claim 6, **characterized In that** the baffle plates are connected to one another by way of a transverse strut (21).

8. A moving-bed reactor installation according to one of Claims 4 to 7, **characterized in that** the baffle plates of a plurality of funnel or channel modules can be jointly moved forwards and backwards by means of a thrusting and pulling member (22).

9. A moving-bed reactor installation according to one of Claims 4 to 8, **characterized in that** the removal slides (23) or (26) are constructed in the form of fingers or rods and are secured on the baffle plates (20) and (25) respectively in a substantially horizontal extension.

10. A moving-bed reactor installation according to one of Claims 3 to 9, **characterized in that** the bulk-material delivery devices (43B) associated with the bulk-material transmission openings (7B) are each associated in pairs with the two adjacent bulk-material transmission openings (7B).

11. A moving-bed reactor installation according to Claim 3, **characterized in that** a single bulk-material delivery device, for example in the form of a single slide plate (31), is provided below all the bulk-material outlet openings in a substantially horizontally displaceable arrangement and comprises transmission openings (32; 33) optionally in alignment with the bulk-material discharge pipes (9A) or (9B) or none of the bulk-material pipes, depending upon the position.

12. A moving-bed reactor installation according to one of Claims 3 to 10, **characterized in that** the bulk-material baffle plates (19) situated above the bulk-material baffle plates (24) are longer than the bulk-material baffle plates (24), and an opening member, which is open at the top and which keeps the bulk material thrown off by the upper bulk-material baffle plate (19) away from the bulk material thrown off by the lower bulk-material baffle plate (24), is provided for catching the bulk material thrown off by the lower bulk-material baffle plate (24).

13. Amoving-bed reactor installation according to Claim 3, **characterized in that** one respective bulk-material catching container is associated with each individual bulk-material discharge opening or adjacent bulk-material discharge openings jointly, the bulk-material discharge openings or the bulk-material catching containers being displaceable substantially horizontally relative to one another.

14. A moving-bed reactor installation according to one of Claims 1 to 13, **characterized in that** one or more bulk-material hoppers (3A, 3B) is or are arranged above the topmost reaction chamber (5A).

15. A moving-bed reactor installation according to Claim 14, **characterized in that** bulk-material metering pipes (34B) for a reaction chamber (5B) situated at a lower level are led through the bulk-material hopper (3A) for a reaction chamber (5A) situated at a higher level.

16. A moving-bed reactor installation according to Claim 15, **characterized in that** a plurality of bulk-material hoppers are arranged one above the other, and one or more bulk-material metering pipes or shafts are led downwards from the higher bulk-material hoppers through the bulk-material hoppers situated thereunder.

17. A moving-bed reactor installation according to Claim 15 or 16, **characterized in that** the bulk-material metering pipes or shafts (34B) for a reaction chamber (5B) situated at a lower level are led through the bulk-material metering pipes or shafts (34A) for a reaction chamber (5A) situated at a higher level.

18. A moving-bed reactor installation according to one of Claims 14 to 17, **characterized in that** the one or more bulk-material hoppers are provided with one or more bulk-material metering pipes or shafts directed downwards, and the bulk-material metering pipes (34) or shafts for reaction chambers (5B) situated at a lower level are led through the bulk-material transmission openings (7A) of the inflow floor or floors (6A) situated at a higher level.

19. A moving-bed reactor installation according to Claim 18, **characterized in that** the lower ends of the bulk-material metering pipes (34) are branched one or more times in succession in a Y-shape.

20. A moving-bed reactor installation according to one of Claims 1 to 19, **characterized in that** each reaction chamber (5A and 5B) has its own bulk-material hopper arranged immediately above it, and one or more bulk-material metering pipes (34A) or shafts for charging bulk-material hoppers situated at a lower level with bulk material from a bulk-material hopper situated at a higher level are arranged directed away downwards.

21. A moving-bed reactor installation according to one of Qaims 1 to 20, **characterized in that** one or more bulk-material collecting funnels (10A, 10B) are arranged adjacent to one another or one below the other below the lowest inflow floor.

22. A moving-bed reactor installation according to Claim 21, **characterized in that** in the case of collecting funnels (10A, 10B) arranged one below the other one or more bulk-material discharge pipes (9A, 39A) for the bulk material is or are led from at least one of the reaction chambers (5A, 5B) through bulk-material collecting funnels (10A) situated respectively at a higher level to a bulk-material collecting funnel (10B) situated at a lower level.

23. A moving-bed reactor installation according to one of Claims 1 to 20, **characterized in that** at least one bulk-material collecting funnel (10A) is provided immediately below the inflow floor (6A) of an upper reaction chamber (5A) in order to catch the bulk material from the upper reaction chamber (5A), and extension members (39A) [are] provided for removing the bulk material from the at least one bulk-material collecting funnel (10A) and led through the reaction chamber (5B) situated at a lower level and the associated inflow floor (6B).

24. A moving-bed reactor installation according to one of Claims 1 to 23, **characterized in that** the bulk-material discharge pipes of at least one inflow floor (6A, 6B) are led through a fluid-tight intermediate floor (36, 40).

25. A moving-bed reactor installation according to one of Claims 1 to 24, **characterized in that** roof-shaped distribution members (8) are arranged inside at least each upper funnel (29) or each upper channel of at least one of the inflow floors (6A, 6B) in such a way that they cover at least the central surface area, and preferably the entire surface area, of the associated bulk-material transmission opening (7A, 7B) in the manner of a roof,
the distribution members (8) together with the lateral walls (11, 13) of each funnel or each channel form bulk-material transmission openings, and
the distribution members (8) on the inside of the funnel or on the inside of the channel project from the lateral walls (11, 13) towards the inside of the funnel or the inside of the channel respectively and are arranged distributed over the periphery of the funnel or along the channel, wherein fluid transmission openings (15) are preferably arranged in the lateral walls of the funnel or channel.

26. A moving-bed reactor installation according to Claim 25, **characterized in that** the bulk-material discharge pipes are led through the point of intersection of the distribution members (8) of each funnel module.

27. A moving-bed reactor installation according to Claim 26, **characterized in that** the bulk-material discharge pipes occupy the same cross-sectional area as the surface covered by the distribution members (8) in the intersection area thereof.

28. A moving-bed reactor installation according to one of Claims 1 to 27, **characterized in that** a plurality of bulk-material discharge pipes (9A) are connected to one another by a Y-shaped pipe connexion (35).

29. A moving-bed reactor installatian according to Claim 28, **characterized in that** a bulk-material metering pipe (34B) opens substantially in the triangle area of the Y-shaped pipe connexion (35).

30. A moving-bed reactor installation according to Claim 25, **characterized in that** the cross-sections of the extension members (39A) removing the bulk material of an upper reaction chamber (5A) or the cross-sections of bulk-material metering pipes (34) supplying a lower reaction chamber (5B) with bulk material or both types of pipe are dimensioned and arranged in such a way that in the region of their throughflow through an inflow floor (6A, 6B) they occupy the space of a funnel (29) of the inflow floor which has left this position.

31. A moving-bed reactor installation according to one of Claims 1 to 30, **characterized in that** immediately below the upper funnels (29) or channels a lower funnel (28) or a lower channel is provided in alignment or offset with a gap.

32. A moving-bed reactor installation according to Claim 31, **characterized by** an intermediate funnel (30) or an intermediate channel between the upper funnels (29) or the upper channels and the lower funnels (28) or lower channels arranged thereunder and offset therefrom with a gap.

33. A moving-bed reactor installation according to one of Claims 1 to 32, **characterized in that** funnels (28 or 29, or 28 and 29) arranged in row adjacent to one another are provided on two mutually opposite sides with common lateral walls (11, 12) which form a channel.

34. A moving-bed reactor installation according to Claim 33, **characterized in that** lateral walls (13 or 14, or 13 and 14) forming funnels are arranged between the lateral walls (11 or 12, or 11 and 12) forming the longitudinal direction of the channel.

35. A moving-bed reactor installation according to Claim 33 or 34, **characterized in that** in the common lateral walls (11 or 12, or 11 and 12) extending in the longitudinal direction of the channel, fluid transmission openings (16, 17) are provided in the region between laterally adjacent funnels.

36. A moving-bed reactor installation according to one of Claims 1 to 35, **characterized in that** the bulk-material metering pipes (34, 34A, 34B) or shafts or the bulk-material discharge pipes (9A, 9B) or shafts are led in alignment or offset with respect to the transmission openings for bulk material or with the transmission openings for fluid or offset with respect to the two inflow floors (6A, 6B) involved in each case.

37. A moving-bed reactor installation according to one of Claims 11 to 16, **characterized in that** the bulk-material metering pipes (34, 34A, 34B) or shafts or the bulk-material discharge pipes (9A, 9B) or shafts in the contact area of adjacent funnels or channels or concentric with the bulk-material transmission openings are led through the inflow floors (6A, 6B) involved in each case.

38. A moving-bed reactor installation, in particular according to one of Claims 25 to 37, **characterized in that** funnels or channels of inflow floors (6A, 6B) are arranged in alignment or offset with respect to one another with a gap.

39. A moving-bed reactor installation, in particular according to one of Claims 25 to 38, **characterized in that** in a region between the bulk-material transmission openings (7A) of an upper inflow floor (5A) and the bulk-material discharge pipes (9A) outlet openings (42) or perforations (27) are provided for bulk material from the reaction chamber (5A) or a bulk-material hopper above the inflow floor (6A) into the reaction chamber (5B) below the inflow floor (6A).

40. A moving-bed reactor installation according to one of Claims 1 to 39, **characterized in that** the bulk-material discharge pipes (9A) start at a vertical distance below the bulk-material transmission openings (7A).

41. A moving-bed reactor installation according to Claim 40, **characterized in that** the bulk-material inlet opening of the bulk-material discharge pipes (9A) is vertically adjustable.

42. A moving-bed reactor installation according to Claim 40 or 41, **characterized in that** the region close to the bulk-material inlet opening of the bulk-material discharge pipes (9A) is enlarged upwards in cross-section.

43. A moving-bed reactor installation according to one of Claims 40 to 42, **characterized in that** in the case of an inflow floor (6A) comprising one or more funnels or channels the bulk-material inlet openings of the bulk-material discharge pipes (9A) is situated on a peripheral line of a notional straight extension of the lateral walls (11, 13) of the funnels or channels.

44. A moving-bed reactor installation according to one of Claims 40 to 43, **characterized in that** in the case of an inflow floor (6A) comprising one or more funnels or channels at least one perforation (27) or partial extension of the lateral walls (11, 13) is provided in the region of the bulk-material transmission openings (7A), so that part of the bulk material can already escape laterally at a point at a higher level and another part of the bulk material is conveyed further downwards.

45. A moving-bed reactor installation according to one of Claims 1 to 44, **characterized in that** the inlets and outlets for the fluid are arranged below a lower and above an upper inflow floor (6B abd 6A), so that the fluid flows in sucession through the reaction chambers (5B) and (5A) situated one above the other.

46. A moving-bed reactor installation according to one of Claims 1 to 45, **characterized in that** an intermediate floor (36) preventing the passage of fluid from the reaction chamber (5B) situated below an upper inflow floor (6A) into the reaction chamber (5A) situated above the said inflow floor is provided below the said upper inflow floor (6A), and the two reaction chambers (5A) and (5B) and associated inflow floors (6A, 6B) each comprise their own inlets (37A, 37B) and outlets (38A, 38B) for fluid, so that the two reaction spaces can be traversed by the same fluid or by different fluids in parallel connexion or by a single fluid in succession.

47. A method of operating a moving-bed reactor installation according to one of Claims 1 to 46, **characterized in that** the bulk materials are withdrawn separately from one another from reaction chambers arranged one above the other below the lowest inflow floor or individual different inflow floors.

48. A method according to Claim 47, **characterized in that** in the moving-bed reactor installation exhaust gases, preferably from combustion installations such as refuse-combustion installations, are freed of undesired constituents such as heavy metal, In particular mercury, [or] gaseous environmental poisons such as oxides of sulphur or carbon.

49. A method according to Claim 47 or 48, **characterized In that** an adsorption agent which has already been charged beforehand In an upper reaction chamber reaches a lower reaction chamber, while fresh or regenerated bulk material is supplied to the upper reaction chamber.

50. A method according to one of Claims 47 to 49, **characterized In that** a fluid treated in a lower reaction chamber is removed from the said reaction chamber, is mixed with a fluid such as NH₃, and is subsequently supplied to an upper reaction chamber.

## Revendications

1. Installation de réacteur à lit mouvant pour le traitement de fluides à l'aide d'un produit solide faisant office de matière en vrac, de préférence selon le procédé en contre-courant, dans lequel au moins une matière en vrac se déplace de haut en bas et au moins un fluide s'écoule de bas en haut, se composant d'au moins deux chambres de réaction disposées l'une au-dessus de l'autre avec
a) au moins une entrée et au moins une sortie par chambre de réaction pour le passage de la matière en vrac à travers la chambre de réaction
b) au moins une autre entrée et au moins une autre sortie par chambre de réaction pour le passage du fluide à travers la matière en vrac se trouvant dans la chambre de réaction
c) au moins un fond d'écoulement par chambre de réaction pour la répartition du fluide sur la coupe transversale de la chambre de réaction et pour le passage de la matière en vrac vers le bas, chaque fond d'écoulement étant formé de préférence à partir d'un élément en forme d'entonnoir ou de rigole, présentant une ou plusieurs ouvertures de passage de la matière en vrac, disposées à distance les unes des autres et
d) un fond de répartition de la matière en vrac par chambre de réaction pour la répartition de la matière en vrac sur la coupe transversale de la chambre de réaction,
e) des moyens pour l'amenée aux chambres de réaction et l'évacuation depuis ces dernières au moins d'une matière en vrac ainsi que d'au moins un fluide,
f) un ou plusieurs tubes ou puits de décharge de la matière en vrac disposés en aval du fond d'écoulement concerné pour le retrait de la matière en vrac depuis au moins une chambre de réaction supérieure, un ou plusieurs tubes (9A) ou puits de décharge de la matière en vrac traversent la chambre de réaction inférieure (5B) et le fond d'écoulement respectif (6B),
**caractérisée en ce que**
les embouchures inférieures d'au moins une rangée de tubes (9A, 9B) ou puits de décharge de la matière en vrac à partir de différentes chambres de réaction (5A, 5B) disposées les unes au-dessus des autres débouchent en aval du fond d'ecoulement le plus inférieur des chambres de reaction inférieures (5B) et en étant séparées au choix selon la chambre d'au moins un dispositif d'évacuation à actionné (31, 43A, 43B) peuvent être fermées ou ouvertes selon les chambres de réaction (Fig. 1 à fig. 10) ou **en ce qu'**entre les chambres de réaction (5A, 5B) disposées les unes au-dessus des autres est disposé un dispositif d'évacuation à actionné (43A) de la matière en vrac pour la chambre de réaction supérieure (5A), **en ce qu'**à ce dispositif d'évacuation (43A) de la matière en vrac est raccordé au moins une pièce de rallonge (39A) guidée à travers la chambre de réaction inférieure (5B) présentant le fond d'écoulement (6B) et **en ce que** cette pièce sert de tube ou puits de décharge de la matière en vrac et **en ce que** pour la chambre de réaction inférieure (5B), il est prévu un dispositif d'évacuation à actionné (43B) de la matière en vrac (Fig. 11 à Fig. 13B).

2. Installation de réacteur à lit mouvant selon la revendication 1,
**caractérisée en ce que**
pour l'entrée en impact d'une chambre de réaction inférieure (5B) avec le produit en vrac, un ou plusieurs tubes (34 34A) ou puits de distribution de la matière en vrac sont guidés à travers une ou plusieurs chambres de réaction (5A) se trouvant en amont de cette chambre de réaction inférieure (5B) et à travers le/les fond(s) d'écoulement respectif(s) (6A).

3. Installation de réacteur à lit mouvant selon la revendication 1 ou 2, **caractérisée en ce que** dans le cas de dispositifs d'évacuation (31, 43A, 43B) de la matière en vrac disposés ensemble en aval de la chambre de réaction inférieure (5B), et ce pour plusieurs chambres de réaction (5A, 5B) disposées les unes au-dessus des autres, il est prévu un organe d'arrêt (31) efficace essentiellement dans un plan unique pour plusieurs chambres de réaction (5A, 5B) ou **en ce que** les embouchures inférieures des tubes (9A, 9B) ou puits de décharge de la matière en vrac débouchent depuis des chambres de réaction différentes (5A, 5B) disposées les unes au-dessus des autres dans deux plans différents et les organes d'arrêt pouvant être fermés et ouverts ou les dispositifs d'évacuation de la matière en vrac pour les embouchures inférieures des tubes (9A, 9B) ou puits de décharge de la matière en vrac ou pour les ouvertures de passage (7A, 7B) de la matière en vrac se composent de plaques de retenue (19) ou (24) de la matière en vrac disposées à distance en aval des embouchures et de coulisses de déblaiement (23) ou (26) mobiles latéralement entre les embouchures et les plaques de retenue.

4. Installation de réacteur à lit mouvant selon la revendication 3, **caractérisée en ce que** la fente, restant latéralement entre les plaques de retenue (19) de la matière en vrac et une délimitation à gauche, respectivement à droite, des embouchures des tubes de décharge (9B) de la matière en vrac, est recouverte par des plaques de retenue (20) sensiblement verticales.

5. Installation de réacteur à lit mouvant selon la revendication 3 ou 4, **caractérisée en ce que** les plaques de retenue (24) de la matière en vrac associées aux tubes de décharge (9A) de la matière en vrac sont limitées par des plaques de retenue latérales (25), sensiblement verticales.

6. Installation de réacteur à lit mouvant selon l'une des revendications de 3 à 5, **caractérisée en ce que** les plaques de retenue (20, 25) sont rassemblées pour plusieurs modules d'entonnoirs ou de rigoles placés sur une rangée les uns derrière les autres.

7. Installation de réacteur à lit mouvant selon la revendication 6, **caractérisée en ce que** les plaques de retenue sont reliées entre elles par une traverse (21).

8. Installation de réacteur à lit mouvant selon l'une des revendications de 4 à 7, **caractérisée en ce que** les plaques de retenue de plusieurs modules d'entonnoirs ou de rigoles peuvent être avancées ou reculées en commun à l'aide d'organes de traction et de poussée (22).

9. Installation de réacteur à lit mouvant selon l'une des revendications 4 à 8, **caractérisée en ce que** les coulisses de déblaiement (23) ou (26) revêtent une forme de doigt ou de barre et sont fixées aux plaques de retenue (20) respectivement (25) en extension approximativement horizontale.

10. Installation de réacteur à lit mouvant selon l'une des revendications 3 à 9, **caractérisée en ce que** les dispositifs d'évacuation (43B) de la matière en vrac associés aux ouvertures de passage (7B) de la matière en vrac sont attribués chacun par paire en commun aux deux ouvertures de passage (7B) de la matière en vrac, les plus proches.

11. Installation de réacteur à lit mouvant selon la revendication 3, **caractérisée en ce qu'**un seul dispositif d'évacuation de la matière en vrac, par exemple sous forme d'une seule plaque à coulisse (31) est prévu en aval de toutes les embouchures de sortie de la matière en vrac dans une disposition mobile approximativement horizontale et ce dispositif présente les ouvertures de passage (32, 33) s'alignant avec les tubes de décharge (9A) ou (9B) de la matière en vrac ou bien avec aucun d'entre eux selon la position choisie.

12. Installation de réacteur à lit mouvant selon l'une des revendications 3 à 10, **caractérisée en ce que** les plaques de retenue (19) de la matière en vrac situées en amont des plaques de retenue (24) de la matière en vrac sont plus longues que les plaques de retenue (24) de la matière en vrac et pour la récupération de la matière en vrac provenant de la plaque de retenue inférieure (24) de la matière en vrac, il est prévu une embouchure ouverte en haut, qui écarte le produit en vrac provenant de la plaque de retenue supérieure (19) du la matière en vrac de la plaque de retenue inférieure (24) de la matière en vrac.

13. Installation de réacteur à lit mouvant selon la revendication 3, **caractérisée en ce que** chaque ouverture de décharge de la matière en vrac ou en commun des ouvertures de décharge de la matière en vrac voisines sont associées en commun à chaque fois à un récipient de récupération de la matière en vrac, les ouvertures de décharge de la matière en vrac ou les récipient de récupération de la matière en vrac étant mobiles, sensiblement à l'horizontale, de manière relative les uns par rapport aux autres.

14. Installation de réacteur à lit mouvant selon l'une des revendications 1 à 13, **caractérisée en ce qu'**en amont de la chambre de réaction supérieure (5A) sont disposés un ou plusieurs silos de matière en vrac (3A, 3B).

15. Installation de réacteur à lit mouvant selon la revendication 14, **caractérisée en ce que** des tubes de distribution (34B) de la matière en vrac pour une chambre de réaction inférieure (5B) sont guidés à travers le silo (3A) de la matière en vrac pour une chambre de réaction supérieure (5A).

16. Installation de réacteur à lit mouvant selon la revendication 15, **caractérisée en ce que** plusieurs silos sont disposés les uns au-dessus des autres et depuis le silo supérieur de la matière en vrac, un ou plusieurs tubes ou puits de distribution de la matière en vrac sont guidés vers le bas à travers le silo de matière en vrac se trouvant en dessous.

17. Installation de réacteur à lit mouvant selon la revendication 15 ou 16, **caractérisée en ce que** les tubes ou puits (34B) de distribution de la matière en vrac pour une chambre de réaction inférieure (5B) sont guidés à travers les tubes ou puits (34A) de distribution de la matière en vrac pour une chambre de réaction supérieure (5A).

18. Installation de réacteur à lit mouvant selon l'une des revendications 14 à 17, **caractérisée en ce qu'**un ou plusieurs silos de matière en vrac sont munis d'un ou de plusieurs tubes ou puits de distribution de la matière en vrac dirigés vers le bas et les tubes (34) ou puits de distribution de la matière en vrac pour des chambres de réaction inférieures (5B) sont guidés à travers les ouvertures de passage (7A) de la matière en vrac du ou des fonds supérieurs d'écoulement (6A).

19. Installation de réaction à lit mouvant selon la revendication 18, **caractérisée en ce que** les tubes de distribution (34) de la matière en vrac présentent à leur extrémité inférieure une ou plusieurs bifurcations qui se suivent en forme de jambe de pantalon.

20. Installation de réacteur à lit mouvant selon l'une des revendications 1 à 19, **caractérisée en ce que**, directement en amont de chaque chambre de réaction (5A ou 5B), est disposé son propre silo de matière en vrac et un ou plusieurs tubes (34A) ou puits de distribution de matière en vrac sont disposés en étant orientés vers le bas, ceci en vue de l'impact de la matière en vrac sur des silos inférieurs de matière en vrac .

21. Installation de réacteur à lit mouvant selon l'une des revendications 1 à 20, **caractérisée en ce qu'**en aval du fond d'écoulement inférieur, un ou plusieurs entonnoirs collecteurs (10A, 10B) de la matière en vrac sont disposés les uns à côté des autres ou les uns en-dessous des autres.

22. Installation de réacteur à lit mouvant selon la revendication 21, **caractérisée en ce qu'**avec des entonnoirs collecteurs (10A, 10B) disposés les uns en dessous des autres, un ou plusieurs tubes de décharge (9A, 39A) de la matière en vrac pour de la matière en vrac provenant d'au moins une des chambres de réaction (5A, 5B) sont guidés à travers chaque entonnoir collecteur supérieur (10A) de la matière en vrac en direction d'un entonnoir collecteur inférieur (10B).

23. Installation de réacteur à lit mouvant selon l'une des revendications 1 à 20, **caractérisée en ce que** directement en aval du fond d'écoulement (6A) d'une chambre de réaction supérieure (5A), il est prévu au moins un entonnoir collecteur (10A) de la matière en vrac pour la récupération de la matière en vrac provenant de la chambre de réaction supérieure (5A) et que des pièces de rallonge (39A) sont prévues pour le retrait de la matière en vrac hors d'au moins un entonnoir collecteur (10A) de la matière en vrac et elles sont guidées à travers la chambre de réaction inférieure (5B) et le fond d'écoulement respectif (6B).

24. Installation de réacteur à lit mouvant selon l'une des revendications 1 à 23, **caractérisée en ce que** les tubes de décharge de la matière en vrac au moins d'un fond d'écoulement (6A, 6B) sont guidés à travers un fond intermédiaire étanche au fluide (36, 40).

25. Installation de réacteur à lit mouvant selon l'une des revendications 1 à 24, **caractérisée en ce qu'**à l'intérieur d'au moins chaque entonnoir supérieur (29) ou chaque rigole supérieure d'au moins l'un des fonds d'écoulement (6A, 6B) des éléments de répartition (8) en forme de toit sont disposés de sorte qu'ils recouvrent, à la manière d'un toit, au moins la zone de surface centrale, de préférence la zone entière de l'ouverture de passage (7A, 7B) de la matière en vrac,
**en ce que** les éléments de répartition (8) forment ensemble avec les parois latérales (11, 13) de chaque entonnoir ou de chaque rigole des ouvertures de passage de la matière en vrac et
**en ce que** les éléments de répartition (8) débordent, sur la face interne de l'entonnoir, respectivement de la rigole, des parois latérales (11, 13) en direction de l'intérieur de l'entonnoir, respectivement de la rigole et sont répartis sur la périphérie de l'entonnoir, respectivement le long de la rigole, des ouvertures de passage (15) du fluide étant disposées de préférence dans les parois latérales de l'entonnoir ou de la rigole.

26. Installation de réacteur à lit mouvant selon la revendication 25, **caractérisée en ce que** les tubes de décharge de la matière en vrac sont guidés à travers le point d'intersection des éléments de répartition (8) de chaque module d'entonnoirs.

27. Installation de réacteur à lit mouvant selon la revendication 26, **caractérisée en ce que** les tubes de décharge de la matière en vrac prennent la même surface de coupe transversale que la surface recouverte dans sa zone d'intersection par les éléments de répartition (8).

28. Installation de réacteur à lit mouvant selon l'une des revendications 1 à 27, **caractérisée en ce que** plusieurs tubes de décharge (9A) de la matière en vrac sont reliés ensemble par un raccord tubulaire (35) en forme de Y.

29. Installation de réacteur à lit mouvant selon la revendication 28, **caractérisée en ce qu'**un tube de distribution (34B) de la matière en vrac débouche approximativement dans la zone de coin du raccord tubulaire (35) en Y.

30. Installation de réacteur à lit mouvant selon la revendication 25, **caractérisée en ce que** les coupes transversales des pièces de rallonge (39A) évacuant la matière en vrac d'une chambre de réaction supérieure (5A) ou les coupes transversales des tubes de distribution (34) de la matière en vrac alimentant une chambre de réaction inférieure (5B) en matière en vrac ou bien les coupes transversales des deux types de tubes sont disposées et dimensionnées de sorte qu'elles prennent, dans la zone de leur passage à travers un fond d'écoulement (6A, 6B), la place d'un entonnoir (29) du fond d'écoulement, l'entonnoir étant omis à cet endroit.

31. Installation de réacteur à lit mouvant selon l'une des revendications 1 à 30, **caractérisée en ce qu'**il est prévu, directement en aval des entonnoirs supérieurs (29) ou rigoles, un entonnoir inférieur (28) ou une rigole inférieure disposé en alignement ou décalé par intervalle.

32. Installation de réacteur à lit mouvant selon la revendication 31, **caractérisée par** un entonnoir intermédiaire (30) ou une rigole intermédiaire entre les entonnoirs supérieurs (29) ou les rigoles supérieures et les entonnoirs inférieurs (28) ou rigoles inférieures disposés en dessous en décalé par intervalle.

33. Installation de réacteur à lit mouvant selon l'une des revendications 1 à 32, **caractérisée en ce que** des entonnoirs (28 ou 29 ou 28 et 29) disposés l'un à côté de l'autre sur une rangée sont munis, sur deux côtés opposés, de parois latérales (11, 12) communes formant une rigole.

34. Installation de réacteur à lit mouvant selon la revendication 33, **caractérisée en ce qu'**entre les parois latérales (11 ou 12 ou 11 et 12) formant la direction longitudinale de la rigole, sont disposées des parois latérales (13 ou 14 ou 13 et 14) formant des entonnoirs.

35. Installation de réacteur à lit mouvant selon la revendication 33 ou 34, **caractérisée en ce que** dans les parois latérales (11 ou 12 ou 11 et 12) communes s'étendant dans la direction longitudinale de la rigole, il est prévu, dans la zone entre des entonnoirs voisins latéralement, des ouvertures de passage (16, 17) du fluide.

36. Installation de réacteur à lit mouvant selon l'une des revendications 1 à 35, **caractérisée en ce que** les tubes (34, 34A, 34B) ou puits de distribution de la matière en vrac ou les tubes (9A, 9B) ou puits de décharge de la matière en vrac sont guidés à travers le fond d'écoulement (6A, 6B) concerné à chaque fois en alignement ou décalé par rapport aux ouvertures de passage pour le produit en vrac ou par rapport aux ouvertures de passage pour le fluide ou décalé par rapport aux deux.

37. Installation de réacteur à lit mouvant selon l'une des revendications 11 à 16, **caractérisée en ce que** les tubes (34, 34A, 34B) ou puits de distribution de la matière en vrac ou les tubes (9A, 9B) ou puits de décharge de la matière en vrac sont guidés à travers le fond d'écoulement (6A, 6B) concerné à chaque fois dans la zone de contact des entonnoirs ou rigoles voisins ou de manière concentrique par rapport aux ouvertures de passage de la matière en vrac.

38. Installation de réacteur à lit mouvant, en particulier selon l'une des revendications 25 à 37, **caractérisée en ce que** des entonnoirs ou des rigoles des fonds d'écoulement (6A, 6B) placés les uns au-dessus des autres sont disposés alignés ou décalés par intervalle les uns par rapport aux autres.

39. Installation de réacteur à lit mouvant, en particulier selon l'une des revendications 25 à 38, **caractérisée en ce que** dans une zone entre les ouvertures de passage (7A) de la matière en vrac d'un fond d'écoulement supérieur (5A) et les tubes de décharge (9A) de la matière en vrac, il existe des ouvertures de sortie (42) ou des passages (27) pour le produit en vrac depuis la chambre de réaction (5A) ou depuis un silo de matière en vrac en amont du fond d'écoulement (6A) dans la chambre de réaction (5B) en aval du fond d'écoulement (6A).

40. Installation de réacteur à lit mouvant selon l'une des revendications 1 à 39, **caractérisée en ce que** les tubes de décharge (9A) de la matière en vrac commencent à distance verticale en aval des ouvertures de passage (7A) de la matière en vrac.

41. Installation de réacteur à lit mouvant selon la revendication 40, **caractérisée en ce que** l'embouchure d'entrée de la matière en vrac des tubes de décharge (9A) de la matière en vrac est réglable en hauteur.

42. Installation de réacteur à lit mouvant selon la revendication 40 ou 41, **caractérisée en ce que** la coupe transversale de la zone proche de l'embouchure d'entrée de la matière en vrac des tubes de décharge (9A) de la matière en vrac est élargie vers le haut.

43. Installation de réacteur à lit mouvant selon l'une des revendications 40 à 42, **caractérisée en ce que**, pour un fond d'écoulement (6A) se composant d'un ou plusieurs entonnoirs ou rigoles, les embouchures d'entrée de la matière en vrac des tubes de décharge (9A) de la matière en vrac se situent sur une ligne périphérique d'un prolongement fictif rectiligne des parois latérales (11, 13) de rigole ou d'entonnoir.

44. Installation de réacteur à lit mouvant selon l'une des revendications 40 à 43, **caractérisée en ce que**, pour un fond d'écoulement (6A) se composant d'un ou plusieurs entonnoirs ou rigoles, il est prévu, dans la zone des ouvertures de passage (7A) de la matière en vrac, au moins un passage (27) ou un prolongement partiel des parois latérales (11, 13), de sorte qu'une partie de la matière en vrac puisse déjà sortir latéralement à un point supérieur et que l'autre partie soit guidée davantage vers le bas.

45. Installation de réacteur à lit mouvant selon l'une des revendications 1 à 44, **caractérisée en ce que** les entrées et les sorties pour le fluide sont disposées en aval d'un fond d'écoulement inférieur et en amont d'un fond d'écoulement supérieur (6B et 6A), de sorte que le fluide traverse l'une après l'autre les chambres de réaction (5B) et (5A) se trouvant l'une au-dessus de l'autre.

46. Installation de réacteur à lit mouvant selon l'une des revendications 1 à 45, **caractérisée en ce qu'**il est prévu, en aval d'un fond d'écoulement supérieur (6A), un fond intermédiaire (36) interdisant le passage du fluide depuis la chambre de réaction (5B) située en aval de ce fond d'écoulement dans la chambre de réaction (5A) située en amont de ce fond d'écoulement et **en ce que** les deux chambres de réaction (5A) et (5B) et les fonds d'écoulement respectifs (6A, 6B) présentent chacun des entrées propres (37A, 37B) et des sorties propres (38A, 38B) pour le fluide, de sorte que les deux espaces de réaction puissent être traversés par le même fluide ou par des fluides différents en circuit parallèle ou par un fluide unique, l'un après l'autre.

47. Procédé pour le fonctionnement d'une installation de réacteur à lit mouvant selon l'une des revendications 1 à 46, **caractérisé en ce que** les matières en vrac sont retirées séparement les unes des autres des chambres de réaction disposées les unes au-dessus des autres en aval du fond d'écoulement inférieur ou en aval de chacun des différents fond d'écoulement.

48. Procédé selon la revendication 47, **caractérisé en ce que** dans l'installation de réacteur à lit mouvant des gaz d'échappement, de préférence provenant d'installations d'incinération telles que les installations d'incinération de déchets, sont débarrassés de composants indésirables, tels que du métal lourd, en particulier le mercure, des toxiques polluants gazeux tels que les oxydes d'azote ou de soufre.

49. Procédé selon la revendication 47 ou 48, **caractérisé en ce qu'**un produit d'adsorption parvient dans la chambre de réaction inférieure, produit qui a été déjà préchargé dans une chambre de réaction supérieure, pendant que de la matière en vrac fraîche ou régénérée est envoyée à la chambre de réaction supérieure.

50. Procédé selon l'une des revendications 47 à 49, **caractérisé en ce qu'**un fluide traité dans une chambre de réaction inférieure est extrait de cette chambre de réaction, est mélangé à un fluide, tel que du NH₃ et est ensuite amené dans une chambre de réaction supérieure.
